# EUROPEAN PATENT SPECIFICATION

(11) **EP 4 190 000 B1**
(45) Date of publication and mention of the grant of the patent: **16.07.2025**
(21) Application number: 21736942.0
(22) Date of filing: 09.06.2021
(51) Int. Cl.: H04W 16/14, H04W 56/00, H04B 7/185

(54) **WIRELESS COMMUNICATION WITH A CONFIGURABLE GAP**
DRAHTLOSE KOMMUNIKATION MIT KONFIGURIERBARER LÜCKE
COMMUNICATION SANS FIL AVEC UN ESPACE CONFIGURABLE

(30) Priority: 31.07.2020 US 202062706116 P; 08.06.2021 US 202117303820
(43) Date of publication of application: 07.06.2023
(73) Proprietor: QUALCOMM INCORPORATED, San Diego, California 92121-1714 (US)
(72) Inventor: SENGUPTA, Ayan, San Diego, California 92121 (US); RICO ALVARINO, Alberto, San Diego, California 92121 (US); WANG, Xiao Feng, San Diego, California 92121 (US); LIU, Le, San Diego, California 92121 (US); SHRESTHA, Bharat, San Diego, California 92121 (US); MA, Liangping, San Diego, California 92121 (US); GAAL, Peter, San Diego, California 92121 (US); MA, Jun, San Diego, California 92121 (US); PHUYAL, Umesh, San Diego, California 92121 (US)
(74) Representative: Bardehle Pagenberg Partnerschaft mbB Patentanwälte Rechtsanwälte
(86) International application number: PCT/US2021/070683
(87) International publication number: WO 2022/026970

(56) References cited:
- US-A1- 2013 208 587
- US-B2- 10 660 091
- SPREADTRUM COMMUNICATIONS: "TDM transmission using UL/DL gaps", vol. RAN WG1, no. Busan, Korea; 20160411 - 20160415, 5 April 2016 (2016-04-05), XP051080673, Retrieved from the Internet <URL:http://www.3gpp.org/ftp/tsg_ran/WG1_RL1/TSGR1_84b/Docs/> [retrieved on 20160405]
- "3rd Generation Partnership Project; Technical Specification Group Radio Access Network; Study on New Radio (NR) to support non-terrestrial networks (Release 15)", vol. TSG RAN, no. V15.3.0, 22 July 2020 (2020-07-22), pages 1 - 126, XP051925764, Retrieved from the Internet <URL:ftp://ftp.3gpp.org/Specs/archive/38_series/38.811/38811-f30.zip 38811-f30.doc> [retrieved on 20200722]
- AT&T: "Operating scenarios for IAB", vol. RAN WG4, no. Reno, US; 20190513 - 20190517, 13 May 2019 (2019-05-13), XP051732979, Retrieved from the Internet <URL:http://www.3gpp.org/ftp/Meetings%5F3GPP%5FSYNC/RAN4/Docs/R4%2D1906019%2Ezip> [retrieved on 20190513]

## Description

### CROSS-REFERENCE TO RELATED APPLICATIONS

This Patent Application claims priority to U.S. Provisional Patent Application No. 62/706,116, filed on July 31, 2020, entitled "SCHEDULING WITH CONFIGURABLE GAPS IN NON-TERRESTRIAL NETWORKS," and U.S. Nonprovisional Patent Application No. 17/303,820, filed on June 8, 2021, entitled "WIRELESS COMMUNICATION WITH A CONFIGURABLE GAP".

### FIELD OF THE DISCLOSURE

Aspects of the present disclosure generally relate to wireless communication and to techniques and apparatuses for scheduling with configurable gaps in non-terrestrial networks.

### BACKGROUND

Wireless communication systems are widely deployed to provide various telecommunication services such as telephony, video, data, messaging, and broadcasts. Typical wireless communication systems may employ multiple-access technologies capable of supporting communication with multiple users by sharing available system resources (e.g., bandwidth, transmit power, or the like). Examples of such multiple-access technologies include code division multiple access (CDMA) systems, time division multiple access (TDMA) systems, frequency-division multiple access (FDMA) systems, orthogonal frequency-division multiple access (OFDMA) systems, single-carrier frequency-division multiple access (SC-FDMA) systems, time division synchronous code division multiple access (TD-SCDMA) systems, and Long Term Evolution (LTE). LTE/LTE-Advanced is a set of enhancements to the Universal Mobile Telecommunications System (UMTS) mobile standard promulgated by the Third Generation Partnership Project (3GPP).

A wireless network may include a number of base stations (BSs) that can support communication for a number of user equipment (UEs). A UE may communicate with a BS via the downlink and uplink. "Downlink" (or "forward link") refers to the communication link from the BS to the UE, and "uplink" (or "reverse link") refers to the communication link from the UE to the BS. As will be described in more detail herein, a BS may be referred to as a Node B, a gNB, an access point (AP), a radio head, a transmit receive point (TRP), a New Radio (NR) BS, a 5G Node B, or the like.

The above multiple access technologies have been adopted in various telecommunication standards to provide a common protocol that enables different user equipment to communicate on a municipal, national, regional, and even global level. NR, which may also be referred to as 5G, is a set of enhancements to the LTE mobile standard promulgated by the 3GPP. NR is designed to better support mobile broadband Internet access by improving spectral efficiency, lowering costs, improving services, making use of new spectrum, and better integrating with other open standards using orthogonal frequency division multiplexing (OFDM) with a cyclic prefix (CP) (CP-OFDM) on the downlink (DL), using CP-OFDM and/or SC-FDM (e.g., also known as discrete Fourier transform spread OFDM (DFT-s-OFDM)) on the uplink (UL), as well as supporting beamforming, multiple-input multiple-output (MIMO) antenna technology, and carrier aggregation. 3GPP R1-163213 discloses TDM transmission using UL/DL gaps, US 2013/0208587 A1 discloses coexistence gaps scheduled within DL transmission bursts, or within UL transmission bursts or within both, and 3GPP TR 38.811 V15.3.0 (2020-07) provides a study on New Radio to support non-terrestrial networks. As the demand for mobile broadband access continues to increase, further improvements in LTE, NR, and other radio access technologies remain useful.

### SUMMARY

The invention is defined in the claims. The following aspects are provided for illustrative purposes. In some aspects, a method of wireless communication performed by a user equipment (UE) includes determining that a downlink communication is to be transmitted to the UE with a configurable gap; determining the configurable gap; and receiving the downlink communication based at least in part on the configurable gap.

In some aspects, a method of wireless communication performed by a UE includes determining that an uplink communication is to be transmitted with a configurable gap; determining the configurable gap; and transmitting the uplink communication based at least in part on the configurable gap.

In some aspects, a UE for wireless communication includes a memory and one or more processors operatively coupled to the memory, the memory and the one or more processors configured to determine that a downlink communication is to be transmitted to the UE with a configurable gap; determine the configurable gap; and receive the downlink communication based at least in part on the configurable gap.

In some aspects, a UE for wireless communication includes a memory and one or more processors operatively coupled to the memory, the memory and the one or more processors configured to determine that an uplink communication is to be transmitted with a configurable gap; determine the configurable gap; and transmit the uplink communication based at least in part on the configurable gap.

In some aspects, a non-transitory computer-readable medium storing a set of instructions for wireless communication includes one or more instructions that, when executed by one or more processors of a UE, cause the UE to determine that a downlink communication is to be transmitted to the UE with a configurable gap; determine the configurable gap; and receive the downlink communication based at least in part on the configurable gap.

In some aspects, a non-transitory computer-readable medium storing a set of instructions for wireless communication includes one or more instructions that, when executed by one or more processors of a UE, cause the UE to determine that an uplink communication is to be transmitted with a configurable gap; determine the configurable gap; and transmit the uplink communication based at least in part on the configurable gap.

In some aspects, an apparatus for wireless communication includes means for determining that a downlink communication is to be transmitted to the apparatus with a configurable gap; means for determining the configurable gap; and means for receiving the downlink communication based at least in part on the configurable gap.

In some aspects, an apparatus for wireless communication includes means for determining that an uplink communication is to be transmitted with a configurable gap; means for determining the configurable gap; and means for transmitting the uplink communication based at least in part on the configurable gap.

Aspects generally include a method, apparatus, system, computer program product, non-transitory computer-readable medium, user equipment, base station, wireless communication device, and/or processing system as substantially described herein with reference to and as illustrated by the drawings and specification.

The foregoing has outlined rather broadly the features and technical advantages of examples according to the disclosure in order that the detailed description that follows may be better understood. Additional features and advantages will be described hereinafter. The conception and specific examples disclosed may be readily utilized as a basis for modifying or designing other structures for carrying out the same purposes of the present disclosure. Such equivalent constructions do not depart from the scope of the appended claims. Characteristics of the concepts disclosed herein, both their organization and method of operation, together with associated advantages will be better understood from the following description when considered in connection with the accompanying figures. Each of the figures is provided for the purposes of illustration and description, and not as a definition of the limits of the claims.

While aspects are described in the present disclosure by illustration to some examples, those skilled in the art will understand that such aspects may be implemented in many different arrangements and scenarios. Techniques described herein may be implemented using different platform types, devices, systems, shapes, sizes, and/or packaging arrangements. For example, some aspects may be implemented via integrated chip embodiments or other non-module-component based devices (e.g., end-user devices, vehicles, communication devices, computing devices, industrial equipment, retail/purchasing devices, medical devices, or artificial intelligence-enabled devices). Aspects may be implemented in chip-level components, modular components, non-modular components, non-chip-level components, device-level components, or system-level components. Devices incorporating described aspects and features may include additional components and features for implementation and practice of claimed and described aspects. For example, transmission and reception of wireless signals may include a number of components for analog and digital purposes (e.g., hardware components including antennas, radio frequency chains, power amplifiers, modulators, buffers, processor(s), interleavers, adders, or summers). It is intended that aspects described herein may be practiced in a wide variety of devices, components, systems, distributed arrangements, or end-user devices of varying size, shape, and constitution.

### BRIEF DESCRIPTION OF THE DRAWINGS

So that the above-recited features of the present disclosure can be understood in detail, a more particular description, briefly summarized above, may be had by reference to aspects, some of which are illustrated in the appended drawings. It is to be noted, however, that the appended drawings illustrate only certain typical aspects of this disclosure and are therefore not to be considered limiting of its scope, for the description may admit to other equally effective aspects. The same reference numbers in different drawings may identify the same or similar elements.
Fig. 1 is a diagram illustrating an example of a wireless network, in accordance with the present disclosure.
Fig. 2 is a diagram illustrating an example of a base station in communication with a user equipment (UE) in a wireless network, in accordance with the present disclosure.
Fig. 3 is a diagram illustrating an example of a frame structure in a wireless communication network, in accordance with the present disclosure.
Fig. 4 is a diagram illustrating an example of a regenerative satellite deployment and an example of a transparent satellite deployment in a non-terrestrial network.
Fig. 5 is a diagram illustrating an example of timing alignment in a non-terrestrial network, in accordance with the present disclosure.
Figs. 6A-6C and 7A-7C are diagrams illustrating examples associated with scheduling with configurable gaps in non-terrestrial networks, in accordance with the present disclosure.
Figs. 8 and 9 are diagrams illustrating example processes associated with scheduling with configurable gaps in non-terrestrial networks, in accordance with the present disclosure.
Fig. 10 is a block diagram of an example apparatus for wireless communication, in accordance with the present disclosure.

### DETAILED DESCRIPTION

Various aspects of the disclosure are described more fully hereinafter with reference to the accompanying drawings. This disclosure may, however, be embodied in many different forms and should not be construed as limited to any specific structure or function presented throughout this disclosure. Rather, these aspects are provided so that this disclosure will be thorough and complete, and will fully convey the scope of the disclosure to those skilled in the art. Based on the teachings herein, one skilled in the art should appreciate that the scope of the disclosure is intended to cover any aspect of the disclosure disclosed herein, whether implemented independently of or combined with any other aspect of the disclosure. For example, an apparatus may be implemented or a method may be practiced using any number of the aspects set forth herein. In addition, the scope of the disclosure is intended to cover such an apparatus or method which is practiced using other structure, functionality, or structure and functionality in addition to or other than the various aspects of the disclosure set forth herein. It should be understood that any aspect of the disclosure disclosed herein may be embodied by one or more elements of a claim.

Several aspects of telecommunication systems will now be presented with reference to various apparatuses and techniques. These apparatuses and techniques will be described in the following detailed description and illustrated in the accompanying drawings by various blocks, modules, components, circuits, steps, processes, algorithms, or the like (collectively referred to as "elements"). These elements may be implemented using hardware, software, or combinations thereof. Whether such elements are implemented as hardware or software depends upon the particular application and design constraints imposed on the overall system.

It should be noted that while aspects may be described herein using terminology commonly associated with a 5G or NR radio access technology (RAT), aspects of the present disclosure can be applied to other RATs, such as a 3G RAT, a 4G RAT, and/or a RAT subsequent to 5G (e.g., 6G).

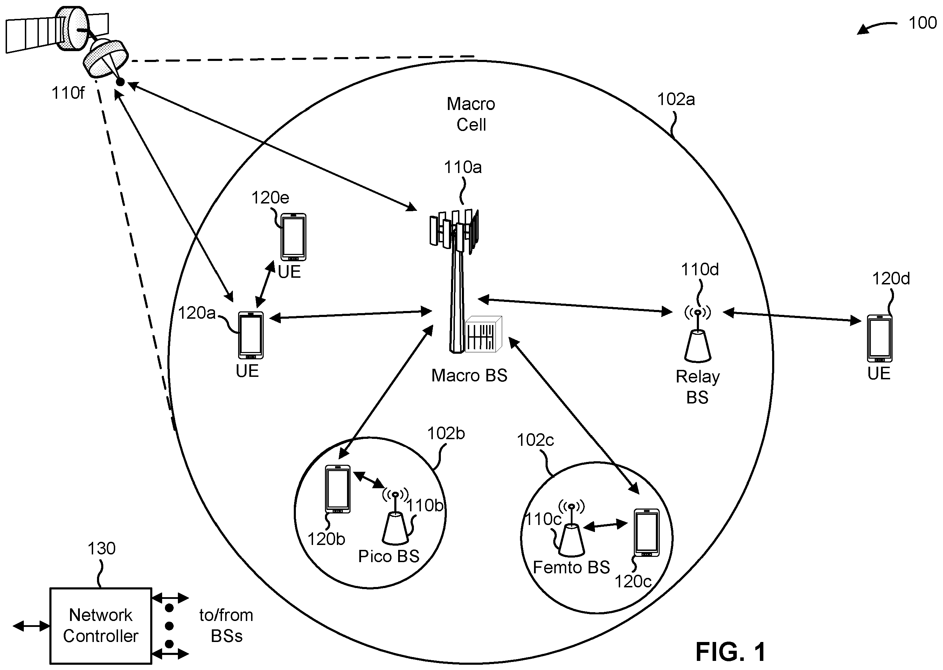

Fig. 1 is a diagram illustrating an example of a wireless network 100, in accordance with the present disclosure. The wireless network 100 may be or may include elements of a 5G (NR) network and/or an LTE network, among other examples. The wireless network 100 may include a number of base stations 110 (shown as BS 110a, BS 110b, BS 110c, and BS 110d) and other network entities. A base station (BS) is an entity that communicates with user equipment (UEs) and may also be referred to as an NR BS, a Node B, a gNB, a 5G node B (NB), an access point, a transmit receive point (TRP), or the like. Each BS may provide communication coverage for a particular geographic area. In 3GPP, the term "cell" can refer to a coverage area of a BS and/or a BS subsystem serving this coverage area, depending on the context in which the term is used.

A BS may provide communication coverage for a macro cell, a pico cell, a femto cell, and/or another type of cell. A macro cell may cover a relatively large geographic area (e.g., several kilometers in radius) and may allow unrestricted access by UEs with service subscription. A pico cell may cover a relatively small geographic area and may allow unrestricted access by UEs with service subscription. A femto cell may cover a relatively small geographic area (e.g., a home) and may allow restricted access by UEs having association with the femto cell (e.g., UEs in a closed subscriber group (CSG)). A BS for a macro cell may be referred to as a macro BS. A BS for a pico cell may be referred to as a pico BS. A BS for a femto cell may be referred to as a femto BS or a home BS. In the example shown in Fig. 1, a BS 110a may be a macro BS for a macro cell 102a, a BS 110b may be a pico BS for a pico cell 102b, and a BS 110c may be a femto BS for a femto cell 102c. A BS may support one or multiple (e.g., three) cells. The terms "eNB", "base station", "NR BS", "gNB", "TRP", "AP", "node B", "5G NB", and "cell" may be used interchangeably herein.

In some aspects, a cell may not necessarily be stationary, and the geographic area of the cell may move according to the location of a mobile BS. In some aspects, the BSs may be interconnected to one another and/or to one or more other BSs or network nodes (not shown) in the wireless network 100 through various types of backhaul interfaces, such as a direct physical connection or a virtual network, using any suitable transport network.

Wireless network 100 may also include relay stations. A relay station is an entity that can receive a transmission of data from an upstream station (e.g., a BS or a UE) and send a transmission of the data to a downstream station (e.g., a UE or a BS). A relay station may also be a UE that can relay transmissions for other UEs. In the example shown in Fig. 1, a relay BS 110d may communicate with macro BS 110a and a UE 120d in order to facilitate communication between BS 110a and UE 120d. A relay BS may also be referred to as a relay station, a relay base station, a relay, or the like.

Wireless network 100 may be a heterogeneous network that includes BSs of different types, such as macro BSs, pico BSs, femto BSs, relay BSs, or the like. These different types of BSs may have different transmit power levels, different coverage areas, and different impacts on interference in wireless network 100. For example, macro BSs may have a high transmit power level (e.g., 5 to 40 watts) whereas pico BSs, femto BSs, and relay BSs may have lower transmit power levels (e.g., 0.1 to 2 watts).

A network controller 130 may couple to a set of BSs and may provide coordination and control for these BSs. Network controller 130 may communicate with the BSs via a backhaul. The BSs may also communicate with one another, directly or indirectly, via a wireless or wireline backhaul.

UEs 120 (e.g., 120a, 120b, 120c) may be dispersed throughout wireless network 100, and each UE may be stationary or mobile. A UE may also be referred to as an access terminal, a terminal, a mobile station, a subscriber unit, a station, or the like. A UE may be a cellular phone (e.g., a smart phone), a personal digital assistant (PDA), a wireless modem, a wireless communication device, a handheld device, a laptop computer, a cordless phone, a wireless local loop (WLL) station, a tablet, a camera, a gaming device, a netbook, a smartbook, an ultrabook, a medical device or equipment, biometric sensors/devices, wearable devices (smart watches, smart clothing, smart glasses, smart wrist bands, smart jewelry (e.g., smart ring, smart bracelet)), an entertainment device (e.g., a music or video device, or a satellite radio), a vehicular component or sensor, smart meters/sensors, industrial manufacturing equipment, a global positioning system device, or any other suitable device that is configured to communicate via a wireless or wired medium.

Some UEs may be considered machine-type communication (MTC) or evolved or enhanced machine-type communication (eMTC) UEs. MTC and eMTC UEs include, for example, robots, drones, remote devices, sensors, meters, monitors, and/or location tags, that may communicate with a base station, another device (e.g., remote device), or some other entity. A wireless node may provide, for example, connectivity for or to a network (e.g., a wide area network such as Internet or a cellular network) via a wired or wireless communication link. Some UEs may be considered Internet-of-Things (IoT) devices, and/or may be implemented as NB-IoT (narrowband internet of things) devices. Some UEs may be considered a Customer Premises Equipment (CPE). UE 120 may be included inside a housing that houses components of UE 120, such as processor components and/or memory components. In some aspects, the processor components and the memory components may be coupled together. For example, the processor components (e.g., one or more processors) and the memory components (e.g., a memory) may be operatively coupled, communicatively coupled, electronically coupled, and/or electrically coupled.

In general, any number of wireless networks may be deployed in a given geographic area. Each wireless network may support a particular RAT and may operate on one or more frequencies. A RAT may also be referred to as a radio technology, an air interface, or the like. A frequency may also be referred to as a carrier, a frequency channel, or the like. Each frequency may support a single RAT in a given geographic area in order to avoid interference between wireless networks of different RATs. In some cases, NR or 5G RAT networks may be deployed.

In some aspects, two or more UEs 120 (e.g., shown as UE 120a and UE 120e) may communicate directly using one or more sidelink channels (e.g., without using a base station 110 as an intermediary to communicate with one another). For example, the UEs 120 may communicate using peer-to-peer (P2P) communications, device-to-device (D2D) communications, a vehicle-to-everything (V2X) protocol (e.g., which may include a vehicle-to-vehicle (V2V) protocol or a vehicle-to-infrastructure (V2I) protocol), and/or a mesh network. In this case, the UE 120 may perform scheduling operations, resource selection operations, and/or other operations described elsewhere herein as being performed by the base station 110.

Devices of wireless network 100 may communicate using the electromagnetic spectrum, which may be subdivided based on frequency or wavelength into various classes, bands, channels, or the like. For example, devices of wireless network 100 may communicate using an operating band having a first frequency range (FR1), which may span from 410 MHz to 7.125 GHz, and/or may communicate using an operating band having a second frequency range (FR2), which may span from 24.25 GHz to 52.6 GHz. The frequencies between FR1 and FR2 are sometimes referred to as mid-band frequencies. Although a portion of FR1 is greater than 6 GHz, FR1 is often referred to as a "sub-6 GHz" band. Similarly, FR2 is often referred to as a "millimeter wave" band despite being different from the extremely high frequency (EHF) band (30 GHz - 300 GHz) which is identified by the International Telecommunications Union (ITU) as a "millimeter wave" band. Thus, unless specifically stated otherwise, it should be understood that the term "sub-6 GHz" or the like, if used herein, may broadly represent frequencies less than 6 GHz, frequencies within FR1, and/or mid-band frequencies (e.g., greater than 7.125 GHz). Similarly, unless specifically stated otherwise, it should be understood that the term "millimeter wave" or the like, if used herein, may broadly represent frequencies within the EHF band, frequencies within FR2, and/or mid-band frequencies (e.g., less than 24.25 GHz). It is contemplated that the frequencies included in FR1 and FR2 may be modified, and techniques described herein are applicable to those modified frequency ranges.

In some aspects, the wireless network 100 may include one or more non-terrestrial network (NTN) deployments in which a non-terrestrial wireless communication device may include a BS 110f (referred to herein, interchangeably, as a "non-terrestrial BS," "non-terrestrial base station," "satellite base station," or "satellite"), a relay station (referred to herein, interchangeably, as a "non-terrestrial relay station" or "satellite relay station"), and/or the like. As used herein, "NTN" may refer to a network for which access is facilitated by a non-terrestrial BS 110f, a non-terrestrial relay station, and/or the like. A satellite (e.g., a BS 110f) may provide a non-terrestrial cell, which may at least partially overlap with one or more cells provided by ground-based BSs, may encompass one or more cells provided by ground-based BSs, and/or the like. In some aspects, a satellite 110f may be associated with a ground-based BS. In some aspects, a BS may be mounted on a satellite 110f.

The wireless network 100 may include any number of non-terrestrial wireless communication devices. A non-terrestrial wireless communication device may include a satellite, a high-altitude platform (HAP), and/or the like. A HAP may include a balloon, a dirigible, an airplane, an unmanned aerial vehicle, and/or the like. A non-terrestrial wireless communication device may be part of an NTN that is separate from the wireless network 100. Alternatively, an NTN may be part of the wireless network 100. Satellites may communicate directly and/or indirectly with other entities in wireless network 100 using satellite communication. The other entities may include UEs, other satellites in the one or more NTN deployments, other types of BSs (e.g., stationary or ground-based BSs), relay stations, one or more components and/or devices included in a core network of wireless network 100, and/or the like.

As indicated above, Fig. 1 is provided as an example. Other examples may differ from what is described with regard to Fig. 1.

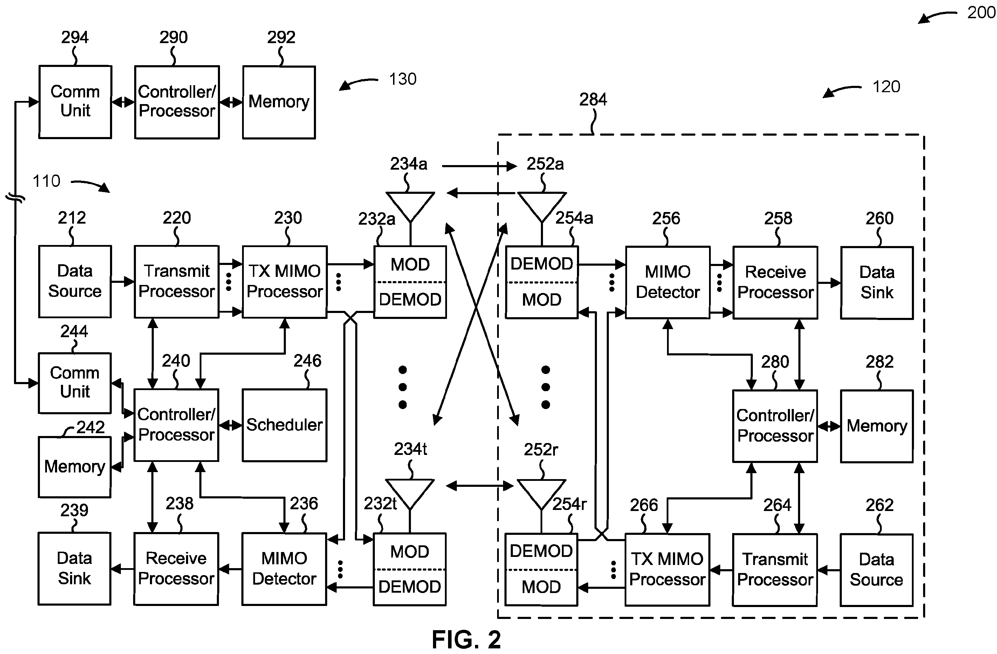

Fig. 2 is a diagram illustrating an example 200 of a base station 110 in communication with a UE 120 in a wireless network 100, in accordance with the present disclosure. Base station 110 may be equipped with *T* antennas 234a through 234t, and UE 120 may be equipped with *R* antennas 252a through 252r, where in general *T* ≥ 1 and *R* ≥ 1.

At base station 110, a transmit processor 220 may receive data from a data source 212 for one or more UEs, select one or more modulation and coding schemes (MCS) for each UE based at least in part on channel quality indicators (CQIs) received from the UE, process (e.g., encode and modulate) the data for each UE based at least in part on the MCS(s) selected for the UE, and provide data symbols for all UEs. Transmit processor 220 may also process system information (e.g., for semi-static resource partitioning information (SRPI)) and control information (e.g., CQI requests, grants, and/or upper layer signaling) and provide overhead symbols and control symbols. Transmit processor 220 may also generate reference symbols for reference signals (e.g., a cell-specific reference signal (CRS) or a demodulation reference signal (DMRS)) and synchronization signals (e.g., a primary synchronization signal (PSS) or a secondary synchronization signal (SSS)). A transmit (TX) multiple-input multiple-output (MIMO) processor 230 may perform spatial processing (e.g., precoding) on the data symbols, the control symbols, the overhead symbols, and/or the reference symbols, if applicable, and may provide *T* output symbol streams to *T* modulators (MODs) 232a through 232t. Each modulator 232 may process a respective output symbol stream (e.g., for OFDM) to obtain an output sample stream. Each modulator 232 may further process (e.g., convert to analog, amplify, filter, and upconvert) the output sample stream to obtain a downlink signal. *T* downlink signals from modulators 232a through 232t may be transmitted via *T* antennas 234a through 234t, respectively.

At UE 120, antennas 252a through 252r may receive the downlink signals from base station 110 and/or other base stations and may provide received signals to demodulators (DEMODs) 254a through 254r, respectively. Each demodulator 254 may condition (e.g., filter, amplify, downconvert, and digitize) a received signal to obtain input samples. Each demodulator 254 may further process the input samples (e.g., for OFDM) to obtain received symbols. A MIMO detector 256 may obtain received symbols from all *R* demodulators 254a through 254r, perform MIMO detection on the received symbols if applicable, and provide detected symbols. A receive processor 258 may process (e.g., demodulate and decode) the detected symbols, provide decoded data for UE 120 to a data sink 260, and provide decoded control information and system information to a controller/processor 280. The term "controller/processor" may refer to one or more controllers, one or more processors, or a combination thereof. A channel processor may determine a reference signal received power (RSRP) parameter, a received signal strength indicator (RSSI) parameter, a reference signal received quality (RSRQ) parameter, and/or a CQI parameter, among other examples. In some aspects, one or more components of UE 120 may be included in a housing 284.

Network controller 130 may include communication unit 294, controller/processor 290, and memory 292. Network controller 130 may include, for example, one or more devices in a core network. Network controller 130 may communicate with base station 110 via communication unit 294.

Antennas (e.g., antennas 234a through 234t and/or antennas 252a through 252r) may include, or may be included within, one or more antenna panels, antenna groups, sets of antenna elements, and/or antenna arrays, among other examples. An antenna panel, an antenna group, a set of antenna elements, and/or an antenna array may include one or more antenna elements. An antenna panel, an antenna group, a set of antenna elements, and/or an antenna array may include a set of coplanar antenna elements and/or a set of non-coplanar antenna elements. An antenna panel, an antenna group, a set of antenna elements, and/or an antenna array may include antenna elements within a single housing and/or antenna elements within multiple housings. An antenna panel, an antenna group, a set of antenna elements, and/or an antenna array may include one or more antenna elements coupled to one or more transmission and/or reception components, such as one or more components of 2.

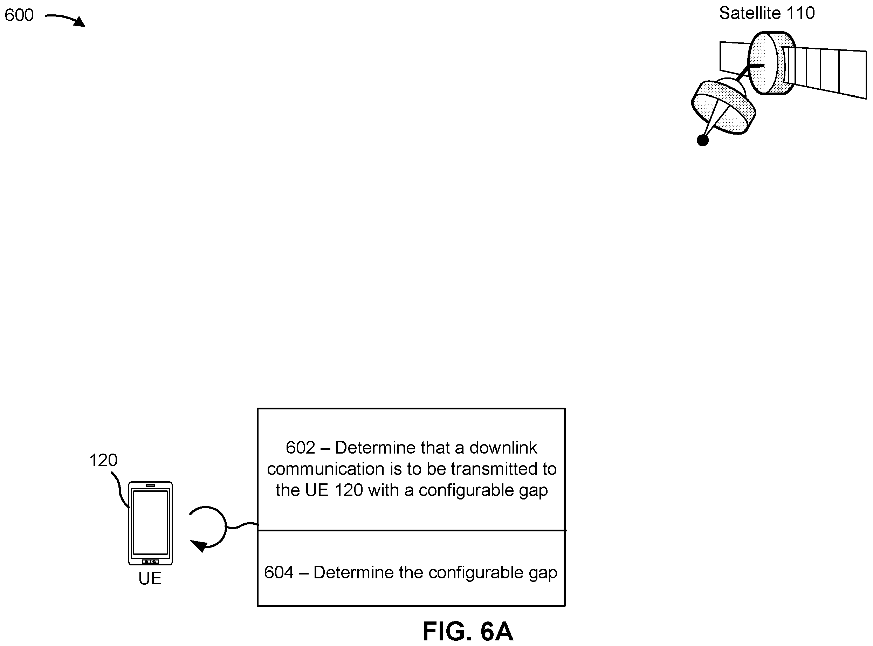

On the uplink, at UE 120, a transmit processor 264 may receive and process data from a data source 262 and control information (e.g., for reports that include RSRP, RSSI, RSRQ, and/or CQI) from controller/processor 280. Transmit processor 264 may also generate reference symbols for one or more reference signals. The symbols from transmit processor 264 may be precoded by a TX MIMO processor 266 if applicable, further processed by modulators 254a through 254r (e.g., for DFT-s-OFDM or CP-OFDM), and transmitted to base station 110. In some aspects, a modulator and a demodulator (e.g., MOD/DEMOD 254) of the UE 120 may be included in a modem of the UE 120. In some aspects, the UE 120 includes a transceiver. The transceiver may include any combination of antenna(s) 252, modulators and/or demodulators 254, MIMO detector 256, receive processor 258, transmit processor 264, and/or TX MIMO processor 266. The transceiver may be used by a processor (e.g., controller/processor 280) and memory 282 to perform aspects of any of the methods described herein (for example, as described with reference to Figs. 6A-9).

At base station 110, the uplink signals from UE 120 and other UEs may be received by antennas 234, processed by demodulators 232, detected by a MIMO detector 236 if applicable, and further processed by a receive processor 238 to obtain decoded data and control information sent by UE 120. Receive processor 238 may provide the decoded data to a data sink 239 and the decoded control information to controller/processor 240. Base station 110 may include communication unit 244 and communicate to network controller 130 via communication unit 244. Base station 110 may include a scheduler 246 to schedule UEs 120 for downlink and/or uplink communications. In some aspects, a modulator and a demodulator (e.g., MOD/DEMOD 232) of the base station 110 may be included in a modem of the base station 110. In some aspects, the base station 110 includes a transceiver. The transceiver may include any combination of antenna(s) 234, modulators and/or demodulators 232, MIMO detector 236, receive processor 238, transmit processor 220, and/or TX MIMO processor 230. The transceiver may be used by a processor (e.g., controller/processor 240) and memory 242 to perform aspects of any of the methods described herein (for example, as described with reference to Figs. 6A-9).

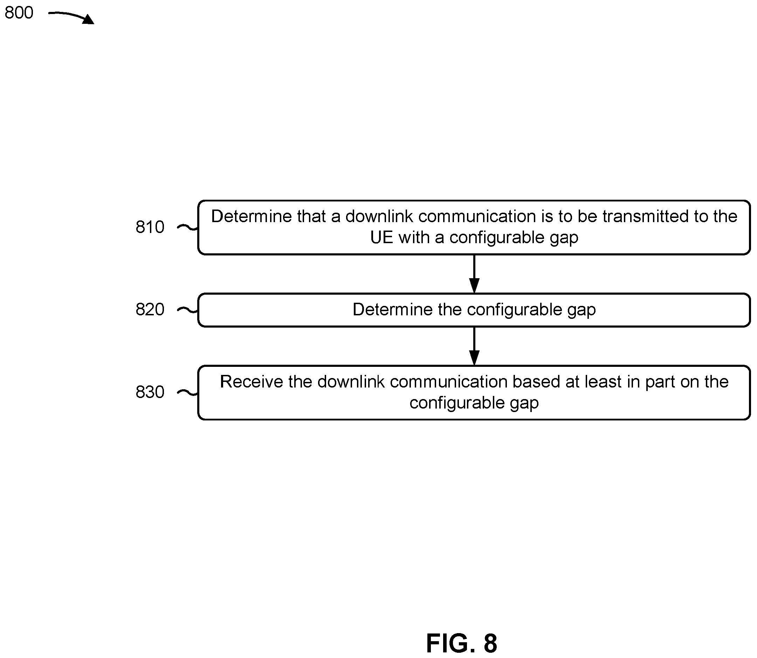

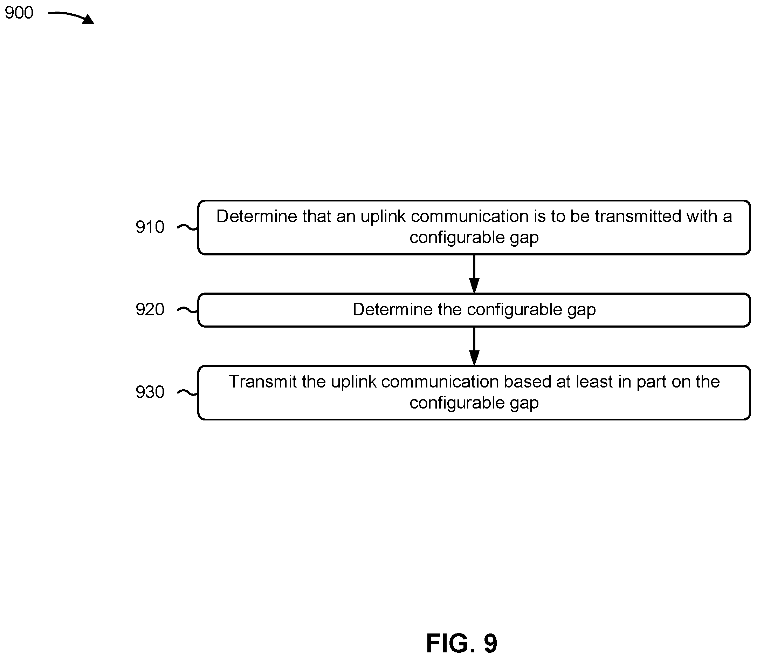

Controller/processor 240 of base station 110, controller/processor 280 of UE 120, and/or any other component(s) of Fig. 2 may perform one or more techniques associated with scheduling with configurable gaps in non-terrestrial networks, as described in more detail elsewhere herein. For example, controller/processor 240 of base station 110, controller/processor 280 of UE 120, and/or any other component(s) of Fig. 2 may perform or direct operations of, for example, process 800 of Fig. 8, process 900 of Fig. 9, and/or other processes as described herein. Memories 242 and 282 may store data and program codes for base station 110 and UE 120, respectively. In some aspects, memory 242 and/or memory 282 may include a non-transitory computer-readable medium storing one or more instructions (e.g., code and/or program code) for wireless communication. For example, the one or more instructions, when executed (e.g., directly, or after compiling, converting, and/or interpreting) by one or more processors of the base station 110 and/or the UE 120, may cause the one or more processors, the UE 120, and/or the base station 110 to perform or direct operations of, for example, process 800 of Fig. 8, process 900 of Fig. 9, and/or other processes as described herein. In some aspects, executing instructions may include running the instructions, converting the instructions, compiling the instructions, and/or interpreting the instructions, among other examples.

In some aspects, UE 120 may include means for determining that a downlink communication is to be transmitted to the UE 120 with a configurable gap, means for determining the configurable gap, means for receiving the downlink communication based at least in part on the configurable gap, and/or the like. In some aspects, UE 120 may include means for determining that an uplink communication is to be transmitted with a configurable gap, means for determining the configurable gap, means for transmitting the uplink communication based at least in part on the configurable gap, and/or the like. In some aspects, such means may include one or more components of UE 120 described in connection with Fig. 2, such as controller/processor 280, transmit processor 264, TX MIMO processor 266, MOD 254, antenna 252, DEMOD 254, MIMO detector 256, receive processor 258, and/or the like.

While blocks in Fig. 2 are illustrated as distinct components, the functions described above with respect to the blocks may be implemented in a single hardware, software, or combination component or in various combinations of components. For example, the functions described with respect to the transmit processor 264, the receive processor 258, and/or the TX MIMO processor 266 may be performed by or under the control of controller/processor 280.

As indicated above, Fig. 2 is provided as an example. Other examples may differ from what is described with regard to Fig. 2.

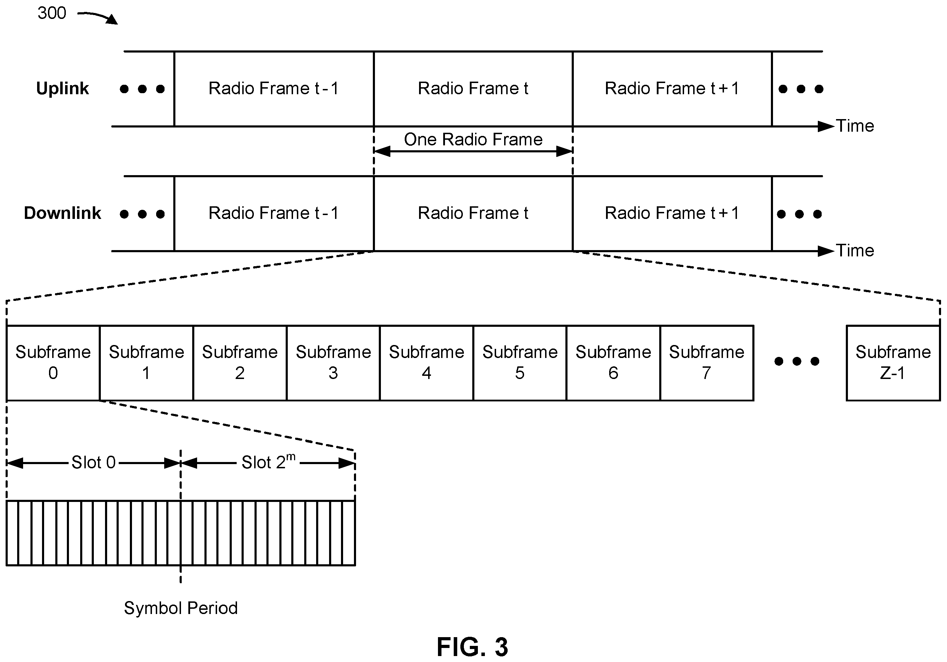

Fig. 3 is a diagram illustrating an example 300 of a frame structure in a wireless communication network, in accordance with various aspects of the present disclosure. The frame structure shown in Fig. 3 is for frequency division duplexing (FDD) in a telecommunication system, such as LTE, NR, and/or the like. The transmission timeline for each of the downlink and uplink may be partitioned into units of radio frames (sometimes referred to as frames). Each radio frame may have a predetermined duration (e.g., 10 milliseconds (ms)) and may be partitioned into a set of *Z* (*Z* ≥ 1) subframes (e.g., with indices of 0 through *Z*-1). Each subframe may have a predetermined duration (e.g., 1 ms) and may include a set of slots (e.g., 2 *m* slots per subframe are shown in Fig. 3, where *m* is an index of a numerology used for a transmission, such as 0, 1, 2, 3, 4, and/or the like). Each slot may include a set of *L* symbol periods. For example, each slot may include fourteen symbol periods (e.g., as shown in Fig. 3), seven symbol periods, or another number of symbol periods. In a case where the subframe includes two slots (e.g., when *m =* 1), the subframe may include 2*L* symbol periods, where the 2*L* symbol periods in each subframe may be assigned indices of 0 through 2*L*-1. In some aspects, a scheduling unit for the FDD may be frame-based, subframe-based, slot-based, mini-slot based, symbol-based, and/or the like.

As indicated above, Fig. 3 is provided as an example. Other examples may differ from what is described with respect to Fig. 3.

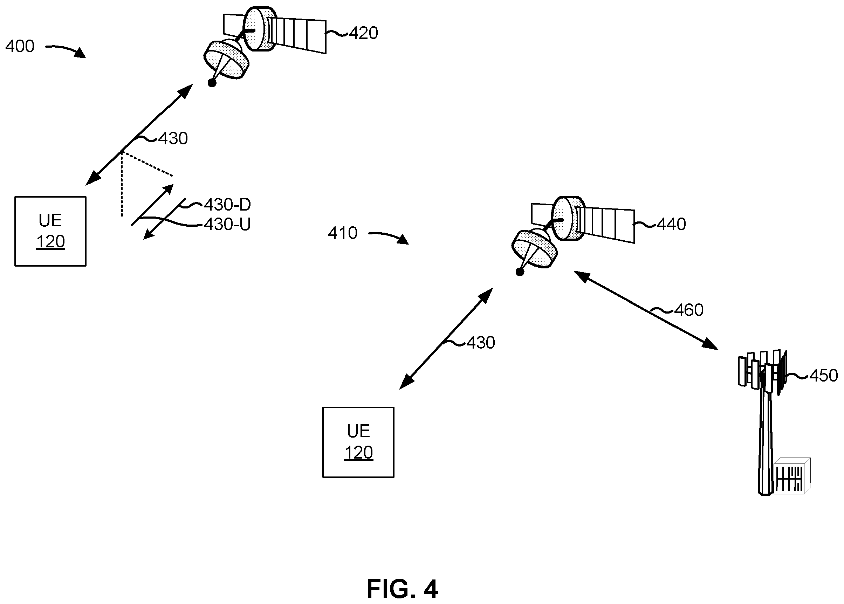

Fig. 4 is a diagram illustrating an example 400 of a regenerative satellite deployment and an example 410 of a transparent satellite deployment in a non-terrestrial network, in accordance with various aspects of the present disclosure.

Example 400 shows a regenerative satellite deployment. In example 400, a UE 120 is served by a satellite 420 via a service link 430. For example, the satellite 420 may include a satellite 110f. In some aspects, the satellite 420 may be referred to as a non-terrestrial base station, a regenerative repeater, an on-board processing repeater, and/or the like. In some aspects, the satellite 420 may demodulate an uplink radio frequency signal and may modulate a baseband signal derived from the uplink radio signal to produce a downlink radio frequency transmission. The satellite 420 may transmit the downlink radio frequency signal on the service link 430. The satellite 420 may provide a cell that covers the UE 120.

Example 410 shows a transparent satellite deployment, which may also be referred to as a bent-pipe satellite deployment. In example 410, a UE 120 is served by a satellite 440 via the service link 430. The satellite 440 may be a transparent satellite. The satellite 440 may relay a signal received from gateway 450 (e.g., a ground-based BS 110) via a feeder link 460. For example, the satellite may receive an uplink radio frequency transmission, and may transmit a downlink radio frequency transmission without demodulating the uplink radio frequency transmission. In some aspects, the satellite may frequency convert the uplink radio frequency transmission received on the service link 430 to a frequency of the uplink radio frequency transmission on the feeder link 460 and may amplify and/or filter the uplink radio frequency transmission. In some aspects, the UEs 120 shown in example 400 and example 410 may be associated with a Global Navigation Satellite System (GNSS) capability, a Global Positioning System (GPS) capability, and/or the like, though not all UEs have such capabilities. The satellite 440 may provide a cell that covers the UE 120.

The service link 430 may include a link between the satellite 440 and the UE 120, and may include one or more of an uplink or a downlink. The feeder link 460 may include a link between the satellite 440 and the gateway 450, and may include one or more of an uplink (e.g., from the UE 120 to the gateway 450) or a downlink (e.g., from the gateway 450 to the UE 120). An uplink of the service link 430 may be indicated by reference number 430-U and a downlink of the service link 430 may be indicated by reference number 430-D. Similarly, an uplink of the feeder link 460 may be indicated by reference number 460-U (not shown in Fig. 4) and a downlink of the feeder link 460 may be indicated by reference number 460-D (not shown in Fig. 4).

The feeder link 460 and the service link 430 may each experience Doppler effects due to the movement of the satellites 420 and 440, and potentially movement of a UE 120. These Doppler effects may be significantly larger than in a terrestrial network. The Doppler effect on the feeder link 460 may be compensated for to some degree, but the Doppler effect may still be associated with some amount of uncompensated frequency error. Furthermore, the gateway 450 may be associated with a residual frequency error, and/or the satellite 420/440 may be associated with an on-board frequency error. These sources of frequency error may cause a received downlink frequency at the UE 120 to drift from a target downlink frequency.

As indicated above, Fig. 4 is provided as an example. Other examples may differ from what is described with regard to Fig. 4.

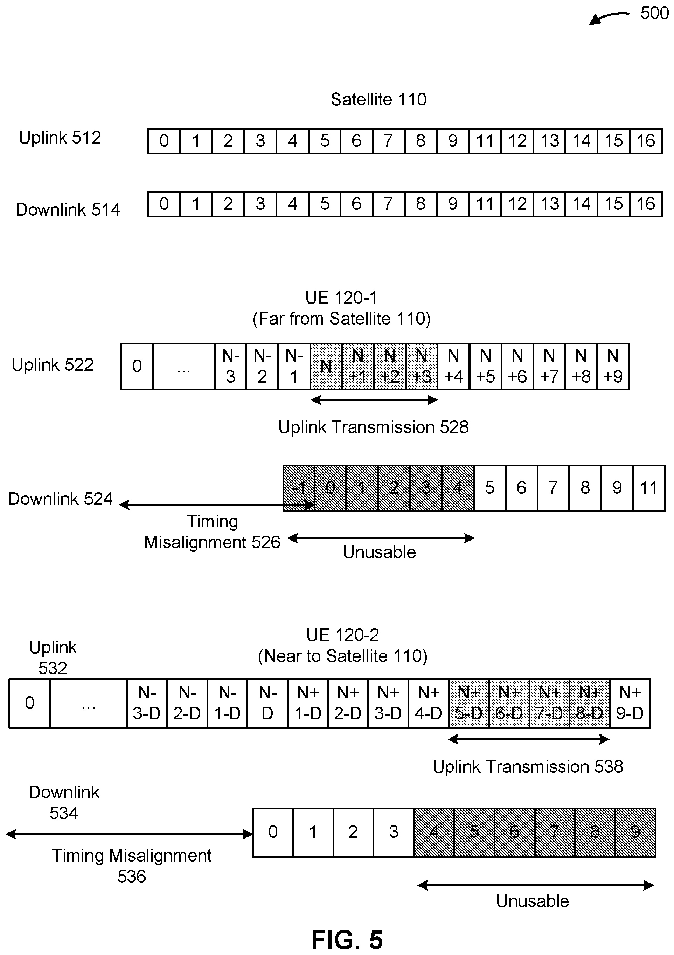

Fig. 5 is a diagram illustrating an example 500 of timing alignment in a non-terrestrial network, in accordance with various aspects of the present disclosure. As shown in Fig. 5, a satellite 110 may be timing aligned in terms of uplink timeline and downlink timeline, while one or more UEs 120 (e.g., UE 120-1, UE 120-2, and/or the like) served in a non-terrestrial cell of the satellite 110 are timing misaligned.

As further shown in Fig. 5, the satellite 110 may be associated with an uplink timeline 512 that includes a plurality of time domain resources (e.g., slots or subframes 0-16) for uplink communication in the non-terrestrial cell, and may be associated with a downlink timeline 514 that includes a plurality of time domain resources (e.g., slots or subframes 0-16) for downlink communication in the non-terrestrial cell. From the perspective of the satellite 110, the uplink timeline 512 and the downlink timeline 514 may be timing aligned (e.g., slot or subframe 0 of the uplink timeline 512 is timing aligned with slot or subframe 0 of the downlink timeline 514, and so on).

Due to the distance between the UE 120-1 and the satellite 110, and the distance between the UE 120-2 and the satellite 110, a propagation delay occurs for communications between the UE 120-1 and the satellite 110, and for communications between the UE 120-2 and the satellite 110. As a result, from the perspective of the UE 120-1, an uplink timeline 522 and a downlink timeline 524 for the UE 120-1 are misaligned. The UE 120-1 may determine a timing misalignment 526 between the uplink timeline 522 and the downlink timeline 524. The timing misalignment 526 may include an offset of *N* slots or subframes (or another quantity of time-domain resources, or another time duration, and/or the like) between a slot or subframe 0 of the uplink timeline 522 and slot or subframe 0 of the downlink timeline 524. In these cases, the UE 120-1 may start an uplink transmission 528 early (e.g., based at least in part on the timing misalignment 526) to compensate for the propagation delay between the UE 120-1 and the satellite 110. If the UE 120-1 is a half-duplex UE (or another type of UE that is unable to perform simultaneous transmission and reception), the slots or subframes used for the uplink transmission 528 may be unusable for downlink reception for the UE 120-1. Moreover, slots, subframes or other time-domain resources on both sides of the slots or subframes used for the uplink transmission 528 may not be usable to provide guard periods for the UE 120-1 to transition between transmission and reception.

As further shown in Fig. 5, the UE 120-2 may be located closer to the satellite 110 relative to UE 120-1. Accordingly, the timing misalignment 536 between the uplink timeline 532 and the downlink timeline 534 for the UE 120-2 may be relatively less than that for the UE 120-1 because of less propagation delay. In these cases, the UE 120-2 may determine the timing misalignment 536 for compensating for the propagation delay to include *N-D* slots or subframes, where *D* is based at least in part on the distance between the UE 120-2 and the satellite 110. In particular, the timing misalignment 536 may be determined as *N* minus *D* (*N-D*) slots or subframes such that the UE 120-2 starts an uplink transmission 538 early to compensate for the propagation delay between the UE 120-2 and the satellite 110. In some cases, for a particular value of *D* (e.g., where *D* = 5), the same uplink subframe/slot index (*N*) may result in different unusable downlink subframe/slot indices at UE 120-1 and 120-2.

As indicated above, Fig. 5 is provided as an example. Other examples may differ from what is described with regard to Fig. 5.

In a non-terrestrial network, a satellite might schedule overlapping communications with a UE. Overlapping communications can occur, for example, where a communication at least partially overlaps in the time domain with one or more subframes or slots of another communication that is to be transmitted across a plurality of slots, a plurality of subframes, and/or the like. If the overlap is not resolved, the overlap may cause a collision between the overlapping communications (e.g., collisions between uplink transmission for the UE and downlink reception for the UE) in cases where the UE is unable to process (or incapable of processing) simultaneous transmissions (such as if the UE is a half-duplex UE). These collisions may result in one or more downlink or uplink communications being dropped or non-receivable at the UE, may result in delays in uplink communications being transmitted to the satellite, may increase retransmissions between the UE and the satellite, and/or the like.

In some cases, a satellite may schedule communications with a UE around one or more fixed gaps, such as the existing fixed gaps available in terrestrial networks, in order to avoid collisions for the UE. However, these fixed gaps are not flexible (e.g., fixed gaps may occur in the time domain at fixed intervals such as every 256 milliseconds, and for fixed durations such as 40 milliseconds). These fixed gaps can make scheduling for the satellite more complex and less flexible, and only applicable in particular scenarios. Moreover, different UEs may experience overlap situations differently, and overlaps for a UE may change from time to time and/or transmission to transmission. The existing fixed gaps available in terrestrial networks are not flexible enough to handle such situations.

Some aspects described herein provide techniques and apparatuses for scheduling with configurable gaps in non-terrestrial networks. A satellite (e.g., satellite 110, satellite 420, and/or the like) may be capable of scheduling and/or configuring an uplink communication or a downlink communication for a UE (e.g., a UE 120) using a configurable gap, such that the configurable gap prevents a collision between the uplink communication and the downlink communication. The configurable gap may be configurable in that the location of the configurable gap, the duration of the configurable gap, the quantity of slots or subframes corresponding to the configurable gaps, and/or other parameters may be configured by the satellite. The configurable gap may be used to interrupt and/or postpone a communication at different/configurable times in the communication to prevent a collision with another communication. The configurable gap may also be configured in a dynamic manner, which increases the flexibility in scheduling communications for the UE.

Fig. 6A-6C are diagrams illustrating an example 600 associated with scheduling with configurable gaps in non-terrestrial networks, in accordance with various aspects of the present disclosure. As shown in Figs. 6A-6C, example 600 may include communication between a UE 120 and a satellite 110 (e.g., a satellite 420). In some aspects, the UE 120 and the satellite 110 may be included in a wireless network, such as wireless network 100. In some aspects, the UE 120 and the satellite 110 may communicate on a wireless access link or a service link 430, which may include an uplink 430-U and a downlink 430-D.

In some aspects, UE 120 may be served by a non-terrestrial cell associated with and/or provided by the satellite 110. In some aspects, the UE 120 and the satellite 110 may communicate based at least in part on an uplink timeline (e.g., uplink timeline 512, uplink timeline 522, uplink timeline 532, and/or the like) and a downlink timeline (e.g., downlink timeline 514, downlink timeline 524, downlink timeline 534, and/or the like). In some aspects, the satellite 110 may schedule and/or configure communications for the UE 120, such as transmission of an uplink communication to the satellite 110, reception of a downlink communication from the satellite 110, and/or the like. In some aspects, the satellite 110 may schedule and/or configure communications for the UE 120 using one or more configurable gaps to avoid and/or prevent collisions for the UE 120.

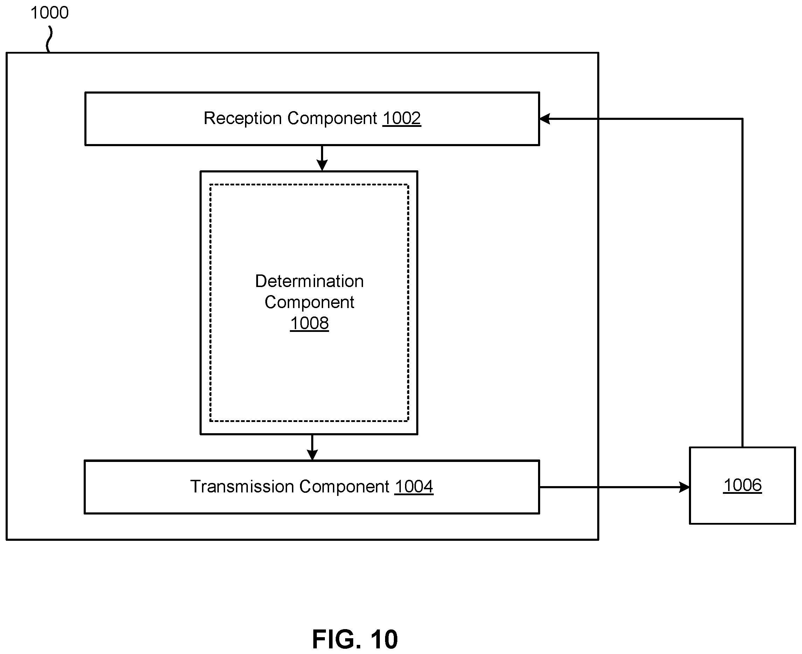

As shown in Fig. 6A, and by reference number 602, the UE 120 may determine (e.g., using receive processor 258, transmit processor 264, controller/processor 280, memory 282, determination component 1008 of Fig. 10, and/or the like) that a downlink communication is to be transmitted to the UE 120 with a configurable gap. In some aspects, the downlink communication may include a physical downlink control channel (PDCCH) communication, a physical downlink shared channel (PDSCH) communication, an MTC PDCCH communication (MPDCCH), a narrowband PDCCH (NPDCCH) communication, a narrowband PDSCH (NPDSCH) communication, or another type of downlink communication.

The configurable gap may be a time interval (or intervals) or a set of one or more time-domain resources (e.g., subframes, slots, and/or the like), in which the UE 120 is to refrain from receiving downlink communications. The configurable gap may provide the UE 120 with an opportunity for transmitting uplink communications during the configurable gap, may provide the UE 120 with guard intervals for transitioning between transmission and reception, and/or the like. In some aspects, the downlink communication may span a plurality of subframes and/or slots. In these examples, at least a portion of the plurality of subframes and/or slots are postponed based at least in part on the configurable gap. In some aspects, the subframes and/or slots in which the downlink communication is to be transmitted may be based at least in part on a quantity of slots aggregated for the downlink communication, a quantity of repetitions of the downlink communication, a quantity of subframes of the downlink communication, and/or the like.

As indicated above, a configurable gap may be different from a fixed gap or other types of gaps used in terrestrial networks. For example, the parameters for the configurable gap may be flexibly and/or dynamically configured by the satellite 110. The parameters may include, for example, a duration of the configurable gap (e.g., in time-domain resources, such as slots, symbols, subframes, and/or the like, or in a time duration including seconds, milliseconds, and/or the like), a time-domain location of the configurable gap, a starting time-domain resource or location for the configurable gap (e.g., a starting slot, a starting subframe, and/or the like), an ending time-domain resource or location for the configurable gap (e.g., an ending slot, an ending subframe, and/or the like), and/or other parameters. In some aspects, the satellite 110 may dynamically configure and activate configurable gaps for downlink communications transmitted to the UE 120 and/or to other UEs in the non-terrestrial network.

In some aspects, the UE 120 may receive (e.g., using antenna 252, DEMOD 254, MIMO detector 256, receive processor 258, controller/processor 280, memory 282, reception component 1002 of Fig. 10, and/or the like), from the satellite 110, an indication that the downlink communication is to be transmitted to the UE 120 with the configurable gap. In these examples, the UE 120 may determine that the downlink communication is to be transmitted to the UE 120 with the configurable gap based at least in part on the indication. In some aspects, the UE 120 receives the indication in a downlink control information (DCI) communication from the satellite 110, in a medium access control control element (MAC-CE) communication from the satellite 110, in a radio resource control (RRC) communication from the satellite 110, and/or in another type of downlink communication.

In some aspects, the UE 120 may determine that the downlink communication is to be transmitted to the UE 120 with the configurable gap based at least in part on an implicit indication or one or more parameters configured for the UE 120 (e.g., without or without an indication from the satellite 110). For example, the UE 120 may determine that the downlink communication is to span a plurality of subframes or slots, may determine that reception of the downlink communication is to overlap at least one of transmission of an uplink communication or one or more guard intervals for the uplink communication in a subset of the plurality of subframes or slots, and may determine that the downlink communication is to be transmitted to the UE with the configurable gap based at least in part on determining that reception of the downlink communication is to overlap at least one of the transmission of the uplink communication or the one or more guard intervals in the subset of the plurality of subframes or slots.

As further shown in Fig. 6A, and by reference number 604, the UE 120 may determine (e.g., using receive processor 258, transmit processor 264, controller/processor 280, memory 282, determination component 1008 of Fig. 10, and/or the like) the configurable gap. In some aspects, the UE 120 determines the configurable gap based at least in part on an explicit indication of the configurable gap (e.g., based at least in part on an explicit indication of one or more parameters for the configurable gap described above). For example, the satellite 110 may transmit the explicit indication of the configurable gap to the UE 120 in the same communication that includes the indication that the downlink communication is to be transmitted to the UE 120 with the configurable gap. As another example, the satellite 110 may transmit the explicit indication of the configurable gap to the UE 120 in a different communication (e.g., a different DCI communication, a different MAC-CE communication, a different RRC communication, and/or the like). In these cases, the UE 120 may determine the configurable gap based at least in part on the explicit indication of the configurable gap (e.g., may determine the parameters for the configurable gap based at least in part on the parameters being specified in a communication from the satellite 110).

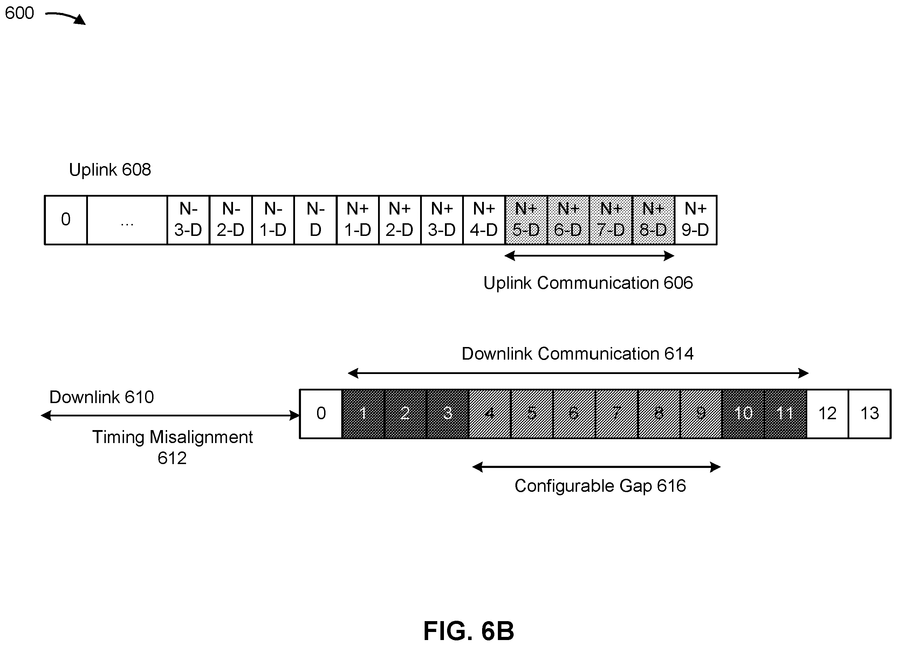

As shown in Fig. 6B, in some aspects, the UE 120 determines the configurable gap based at least in part on an uplink communication 606 scheduled or configured for the UE 120. As shown in Fig. 6B, the uplink timeline 608 for the UE 120 and the downlink timeline 610 for the UE 120 may be misaligned based at least in part on a timing misalignment 612 (e.g., equal to *N - D* slots/subframes in Fig. 6B) determined by the UE 120. For example, the UE 120 may determine (e.g., using receive processor 258, transmit processor 264, controller/processor 280, memory 282, determination component 1008, and/or the like) the timing misalignment 612 based at least in part on a geolocation of the UE 120 and a distance of the geolocation relative to a geolocation of the satellite 110. The timing misalignment may correspond to the round trip time (RTT) between the satellite and the UE. In these cases, the UE 120 may identify one or more time-domain resources of the uplink timeline 608 (e.g., slot *N*+5-*D* through slot *N*+8-*D*) in which transmission of the uplink communication 606 is to at least partially overlap with one or more time-domain resources of the downlink timeline 610 in which the UE 120 is to receive downlink communication 614. The UE 120 may determine the one or more time-domain resources of the downlink timeline 610 (e.g., slots 5-8) as the configurable gap 616.

Moreover, guard-interval time-domain resources may be provided on the downlink timeline 610 prior to and/or the after the one or more time-domain resources of the uplink timeline 608 in which transmission of the uplink communication 606 is to occur. These guard-interval time-domain resources may be provided to permit the UE 120 to transition one or more components of the UE 120 (e.g., antenna 252, DEMOD 254, MIMO detector 256, receive processor 258, transmit processor 264, TX MIMO processor 266, MOD 254, controller/processor 280, memory 282, reception component 1002, transmission component 1004, and/or the like) between reception and transmission. In these examples, the UE 120 may determine that the guard-interval time-domain resources (e.g., slots 4 and 9) are included in the configurable gap 616.

In some aspects, the UE 120 may determine whether a downlink communication is to be transmitted with a configurable gap based at least in part on whether the UE 120 is scheduled or configured to transmit a higher priority uplink communication within the time it would take the UE 120 to complete reception the downlink communication. The respective priorities for the downlink communication and the uplink communication may be channel priorities (e.g., priorities based at least in part on physical channel type), communication type priorities (e.g., priorities associated with hybrid automatic repeat request (HARQ), DCI scheduling, and/or the like), quality of service (QoS) priorities, and/or other types of priorities. In these examples, the UE 120 may determine that the downlink communication is to be interrupted or postponed in favor of the uplink communication (and thus, the downlink communication is to be transmitted with a configurable gap) based at least in part on the priority associated with the uplink communication being higher than the priority associated with the downlink communication.

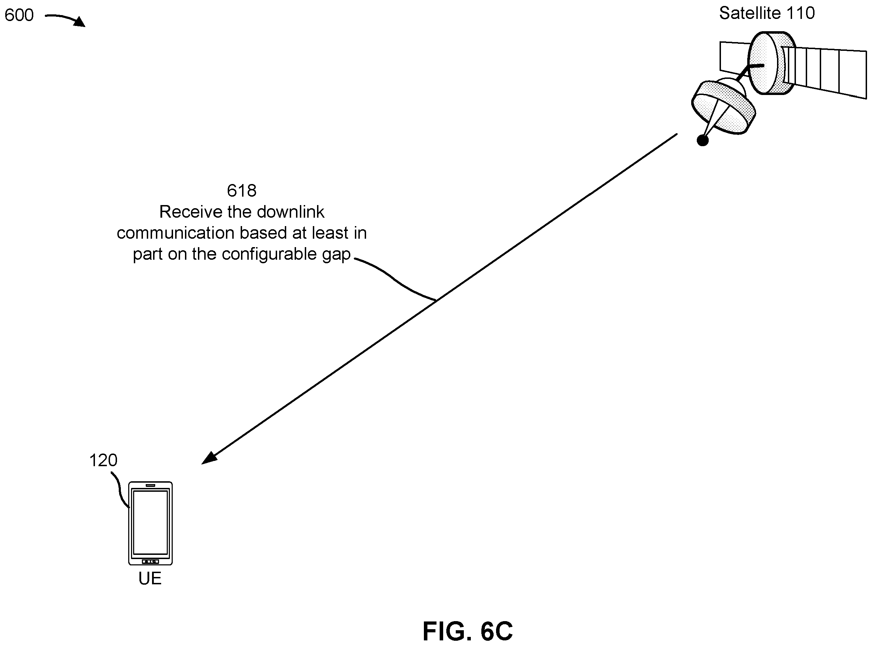

As shown in Fig. 6C, and by reference number 618, the UE 120 may receive (e.g., using antenna 252, DEMOD 254, MIMO detector 256, receive processor 258, controller/processor 280, memory 282, reception component 1002, and/or the like) the downlink communication from the satellite 110 based at least in part on the configurable gap. For example, the UE 120 may monitor and decode the time-domain resources in which the downlink communication is to be transmitted, may switch from reception to transmission during one or more guard-interval time-domain resources included in the configurable gap, may transmit an uplink communication during the configurable gap, may switch from transmission to reception during one or more other guard-interval time-domain resources included in the configurable gap, and/or the like.

As indicated above, Fig. 6A-6C are provided as an example. Other examples may differ from what is described with respect to Fig. 6A-6C.

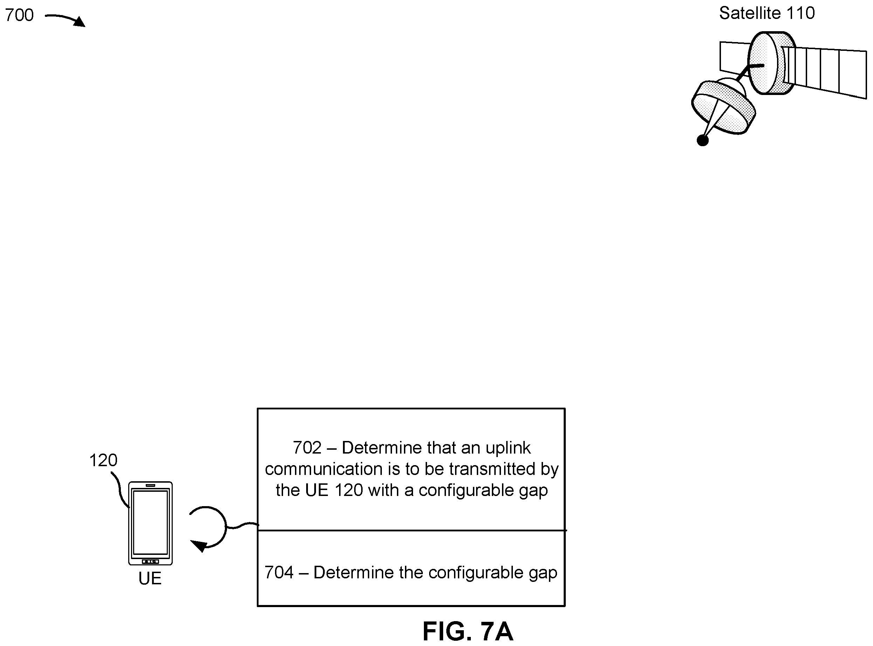

Fig. 7A-7C are diagrams illustrating an example 700 associated with scheduling with configurable gaps in non-terrestrial networks, in accordance with various aspects of the present disclosure. As shown in Figs. 7A-7C, example 700 may include communication between a UE 120 and a satellite 110 (e.g., a satellite 420). In some aspects, the UE 120 and the satellite 110 may be included in a wireless network, such as wireless network 100. In some aspects, the UE 120 and the satellite 110 may communicate on a wireless access link or a service link 430, which may include an uplink 430-U and a downlink 430-D.

In some aspects, UE 120 may be served by a non-terrestrial cell associated with and/or provided by the satellite 110. In some aspects, the UE 120 and the satellite 110 may communicate based at least in part on an uplink timeline (e.g., uplink timeline 512, uplink timeline 522, uplink timeline 532, and/or the like) and a downlink timeline (e.g., downlink timeline 514, downlink timeline 524, downlink timeline 534, and/or the like. In some aspects, the satellite 110 may schedule and/or configure communications for the UE 120, such as transmission of an uplink communication to the satellite 110, reception of a downlink communication from the satellite 110, and/or the like. In some aspects, the satellite 110 may schedule and/or configure communications for the UE 120 using one or more configurable gaps to avoid and/or prevent collisions for the UE 120.

As shown in Fig. 7A, and by reference number 702, the UE 120 may determine (e.g., using receive processor 258, transmit processor 264, controller/processor 280, memory 282, determination component 1008, and/or the like) that an uplink communication is to be transmitted by the UE 120 with a configurable gap. In some aspects, the uplink communication may include a physical uplink control channel (PUCCH) communication, a physical uplink shared channel (PUSCH) communication, a narrowband PUSCH (NPUSCH) communication, an MTC PUCCH communication (MPUCCH), or another type of downlink communication.

The configurable gap may be a time interval (or intervals) or a set of one or more time-domain resources (e.g., subframes, slots, and/or the like), in which the UE 120 is to refrain from transmitting uplink communications. The configurable gap may provide the UE 120 with an opportunity to monitor for and/or receive downlink communications during the configurable gap, may provide the UE 120 with guard intervals for transitioning between transmission and reception, and/or the like. In some aspects, the uplink communication may span a plurality of subframes and/or slots. In these examples, at least a portion of the plurality of subframes and/or slots are postponed based at least in part on the configurable gap. In some aspects, the subframes and/or slots in which the uplink communication is to be transmitted may be based at least in part on a quantity of slots aggregated for the uplink communication, a quantity of repetitions of the uplink communication, a quantity of subframes of the uplink communication, and/or the like.

As indicated above, a configurable gap may be different from a fixed gap or other types of gaps used in terrestrial networks. For example, the parameters for the configurable gap may be flexibly and/or dynamically configured by the satellite 110. The parameters may include, for example, a duration of the configurable gap (e.g., in time-domain resources, such as slots, symbols, subframes, and/or the like, or in a time duration including seconds, milliseconds, and/or the like), a time-domain location of the configurable gap, a starting time-domain resource or location for the configurable gap (e.g., a starting slot, a starting subframe, and/or the like), an ending time-domain resource or location for the configurable gap (e.g., an ending slot, an ending subframe, and/or the like), and/or other parameters. In some aspects, the satellite 110 may dynamically configure and activate configurable gaps for uplink communications transmitted by the UE 120 and/or by other UEs in the non-terrestrial network.

In some aspects, the UE 120 may receive (e.g., using antenna 252, DEMOD 254, MIMO detector 256, receive processor 258, controller/processor 280, memory 282, reception component 1002 of Fig. 10, and/or the like), from the satellite 110, an indication that the uplink communication is to be transmitted by the UE 120 with the configurable gap. In these examples, the UE 120 may determine that the uplink communication is to be transmitted by the UE 120 with the configurable gap based at least in part on the indication. In some aspects, the UE 120 receives the indication in a DCI communication from the satellite 110, in a MAC-CE communication from the satellite 110, in an RRC communication from the satellite 110, and/or in another type of downlink communication.

In some aspects, the UE 120 may determine that the uplink communication is to be transmitted by the UE 120 with the configurable gap based at least in part on an implicit indication or one or more parameters configured for the UE 120 (e.g., without or without an indication from the satellite 110). For example, the UE 120 may determine that the uplink communication is to span a plurality of subframes or slots, may determine that transmission of the uplink communication is to overlap at least one of reception of a downlink communication or one or more guard intervals for the transitioning between transmission and reception in a subset of the plurality of subframes or slots, and may determine that the uplink communication is to be transmitted by the UE with the configurable gap based at least in part on determining that reception of the uplink communication is to overlap at least one of the reception of the downlink communication or the one or more guard intervals in the subset of the plurality of subframes or slots.

As further shown in Fig. 7A, and by reference number 704, the UE 120 may determine (e.g., using receive processor 258, transmit processor 264, controller/processor 280, memory 282, determination component 1008 of Fig. 10, and/or the like) the configurable gap. In some aspects, the UE 120 determines the configurable gap based at least in part on an explicit indication of the configurable gap (e.g., based at least in part on an explicit indication of one or more parameters for the configurable gap described above). For example, the satellite 110 may transmit the explicit indication of the configurable gap to the UE 120 in the same communication that includes the indication that the uplink communication is to be transmitted by the UE 120 with the configurable gap. As another example, the satellite 110 may transmit the explicit indication of the configurable gap to the UE 120 in a different communication (e.g., a different DCI communication, a different MAC-CE communication, a different RRC communication, and/or the like). In these cases, the UE 120 may determine the configurable gap based at least in part on the explicit indication of the configurable gap (e.g., may determine the parameters for the configurable gap based at least in part on the parameters being specified in a communication from the satellite 110).

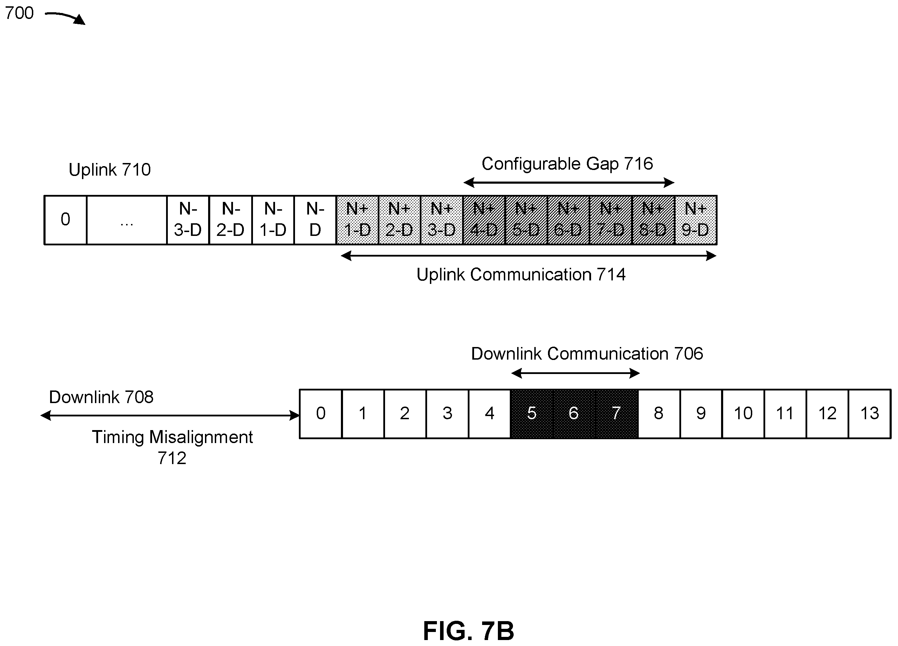

As shown in Fig. 7B, in some aspects, the UE 120 determines the configurable gap based at least in part on a downlink communication 706 scheduled or configured for the UE 120. As shown in Fig. 7B, the downlink timeline 708 for the UE 120 and the uplink timeline 710 for the UE 120 may be timing misaligned based at least in part on a timing misalignment 712 determined by the UE 120 (e.g., equal to N - D slots/subframes in Fig. 7B). For example, the UE 120 may determine (e.g., using receive processor 258, transmit processor 264, controller/processor 280, memory 282, determination component 1008, and/or the like) the timing misalignment 712 based at least in part on a geolocation of the UE 120 and a distance of the geolocation relative to a geolocation of the satellite 110. The timing misalignment may correspond to the RTT between the satellite and the UE. In these cases, the UE 120 may identify one or more time-domain resources of the downlink timeline 708 (e.g., slots 5-7) in which reception of the downlink communication 706 is to at least partially overlap with one or more time-domain resources of the uplink timeline 710 in which the UE 120 is to transmit uplink communication 714. The UE 120 may determine the one or more time-domain resources of the uplink timeline 710 (e.g., slots N+5-D through N+7-D) as the configurable gap 716.

Moreover, guard-interval time-domain resources may be provided on the uplink timeline 710 prior to and/or the after the one or more time-domain resources of the downlink timeline 708 in which reception of the downlink communication 706 is to occur. These guard-interval time-domain resources may be provided to permit the UE 120 to transition one or more components of the UE 120 (e.g., antenna 252, DEMOD 254, MIMO detector 256, receive processor 258, transmit processor 264, TX MIMO processor 266, MOD 254, controller/processor 280, memory 282, reception component 1002, transmission component 1004, and/or the like) between reception and transmission. In these examples, the UE 120 may determine that the guard-interval time-domain resources (e.g., slots N+4-D and N+8-D) are included in the configurable gap 716.

In some aspects, the UE 120 may determine whether an uplink communication is to be transmitted with a configurable gap based at least in part on whether the UE 120 is scheduled or configured to receive a higher priority downlink communication within the time it would take the UE 120 to complete the transmission of the uplink communication. The respective priorities for the downlink communication and the uplink communication may be channel priorities, communication type priorities, QoS priorities, and/or other types of priorities. In these examples, the UE 120 may determine that the uplink communication is to be interrupted or postponed in favor of the downlink communication (and thus, the uplink communication is to be transmitted with a configurable gap) based at least in part on the priority associated with the downlink communication being higher than the priority associated with the uplink communication.

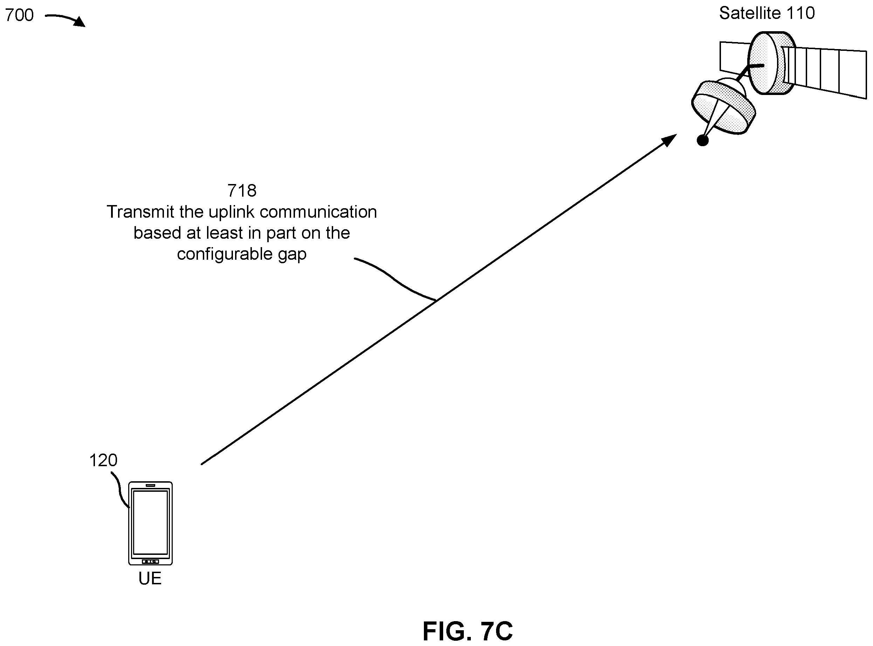

As shown in Fig. 7C, and by reference number 718, the UE 120 may (e.g., using controller/processor 280, transmit processor 264, TX MIMO processor 266, MOD 254, antenna 252, memory 282, transmission component 1004, and/or the like) the uplink communication from the satellite 110 based at least in part on the configurable gap. For example, the UE 120 may transmit the uplink communication in the time-domain resources in which the uplink communication is to be transmitted, may switch from transmission to reception during one or more guard-interval time-domain resources included in the configurable gap, may monitor and decode the downlink communication during the configurable gap, may switch from reception to transmission during one or more other guard-interval time-domain resources included in the configurable gap, may continue with transmitting the uplink communication after the configurable gap, and/or the like.

As indicated above, Fig. 7A-7C are provided as an example. Other examples may differ from what is described with respect to Fig. 7A-7C.

Fig. 8 is a diagram illustrating process 800 performed, for example, by a UE, in accordance with the invention. In process 800, the UE (e.g., UE 120) performs operations associated with scheduling with configurable gaps in non-terrestrial networks.

As shown in Fig. 8, process 800 includes determining that a downlink communication is to be transmitted to the UE with a configurable gap (block 810). For example, the UE (e.g., using antenna 252, demodulator 254, MIMO detector 256, receive processor 258, controller/processor 280, memory 282, reception component 1002, and/or the like) may determine that a downlink communication is to be transmitted to the UE with a configurable gap, as described above.

As further shown in Fig. 8, process 800 includes determining the configurable gap (block 820). For example, the UE (e.g., using receive processor 258, transmit processor 264, controller/processor 280, memory 282, determination component 1008, and/or the like) may determine the configurable gap, as described above.

As further shown in Fig. 8, process 800 includes receiving the downlink communication based at least in part on the configurable gap (block 830). For example, the UE (e.g., using antenna 252, demodulator 254, MIMO detector 256, receive processor 258, controller/processor 280, memory 282, reception component 1002, and/or the like) may receive the downlink communication based at least in part on the configurable gap, as described above.

Process 800 may include additional aspects, such as any single aspect or any combination of aspects described below and/or in connection with one or more other processes described elsewhere herein.

In a first aspect, the configurable gap is dynamically configured and activated for the downlink communication. In a second aspect, alone or in combination with the first aspect, a time duration of the configurable gap is dynamically configured for the configurable gap. In a third aspect, alone or in combination with one or more of the first and second aspects, at least one of is configured for the configurable gap: a time-domain location of the configurable gap relative to a transmission time of the downlink communication, or a time duration of the configurable gap.

In a fourth aspect, alone or in combination with one or more of the first through third aspects, process 800 includes receiving (e.g., using antenna 252, DEMOD 254, MIMO detector 256, receive processor 258, controller/processor 280, memory 282, reception component 1002, and/or the like) an indication that the downlink communication is to be transmitted to the UE with the configurable gap, and determining that the downlink communication is to be transmitted to the UE with the configurable gap comprises determining (e.g., using receive processor 258, transmit processor 264, controller/processor 280, memory 282, determination component 1008, and/or the like) that the downlink communication is to be transmitted to the UE with the configurable gap based at least in part on the indication. In a fifth aspect, alone or in combination with one or more of the first through fourth aspects, receiving the indication comprises receiving (e.g., using antenna 252, DEMOD 254, MIMO detector 256, receive processor 258, controller/processor 280, memory 282, reception component 1002, and/or the like) the indication in at least one of a DCI communication from a non-terrestrial base station, a MAC-CE communication from the non-terrestrial base station, or an RRC communication from the non-terrestrial base station. In a sixth aspect, alone or in combination with one or more of the first through fifth aspects, process 800 includes receiving (e.g., using antenna 252, DEMOD 254, MIMO detector 256, receive processor 258, controller/processor 280, memory 282, reception component 1002, and/or the like) an explicit indication of the configurable gap, and determining the configurable gap comprises determining the configurable gap based at least in part on the explicit indication of the configurable gap.

In a seventh aspect, alone or in combination with one or more of the first through sixth aspects, the explicit indication of the configurable gap identifies at least one of one or more starting locations of the configurable gap, one or more ending locations of the configurable gap, or one or more time durations of the configurable gap. In an eighth aspect, alone or in combination with one or more of the first through seventh aspects, determining the configurable gap comprises identifying (e.g., using receive processor 258, transmit processor 264, controller/processor 280, memory 282, determination component 1008, and/or the like) one or more time-domain resources in which transmission of an uplink communication is to at least partially overlap with reception of the downlink communication, and determining (e.g., using receive processor 258, transmit processor 264, controller/processor 280, memory 282, determination component 1008, and/or the like) the one or more time-domain resources as the configurable gap based at least in part on determining that the uplink communication is to be transmitted over the one or more time-domain resources.

In a ninth aspect, alone or in combination with one or more of the first through eighth aspects, determining the configurable gap comprises identifying (e.g., using receive processor 258, transmit processor 264, controller/processor 280, memory 282, determination component 1008, and/or the like) at least one of one or more guard-interval time-domain resources, prior to the one or more time-domain resources or after the one or more time-domain resources, as being included in the configurable gap. In a tenth aspect, alone or in combination with one or more of the first through ninth aspects, the downlink communication spans a plurality of subframes or slots, and at least a portion of the plurality of subframes or slots are postponed based at least in part the configurable gap.

In an eleventh aspect, alone or in combination with one or more of the first through tenth aspects, the plurality of subframes or slots are based at least in part on at least one of a quantity of slots aggregated for the downlink communication, a quantity of repetitions of the downlink communication, or a quantity of subframes of the downlink communication. In a twelfth aspect, alone or in combination with one or more of the first through tenth aspects, the UE communicates over a non-terrestrial network, and receiving the downlink communication comprises receiving (e.g., using antenna 252, DEMOD 254, MIMO detector 256, receive processor 258, controller/processor 280, memory 282, reception component 1002, and/or the like) downlink communication from a satellite of the non-terrestrial network. In a thirteenth aspect, alone or in combination with one or more of the first through twelfth aspects, according to the invention, one or more parameters of the configurable gap are different than fixed transmission gap for terrestrial networks.

In a fourteenth aspect, alone or in combination with one or more of the first through thirteenth aspects, determining the configurable gap comprises determining (e.g., using receive processor 258, transmit processor 264, controller/processor 280, memory 282, determination component 1008, and/or the like) the configurable gap based at least in part on a timing misalignment between an uplink timeline associated with the UE and a downlink timeline associated with the UE. In a fifteenth aspect, alone or in combination with one or more of the first through fourteenth aspects, the downlink communication comprises a PDCCH communication, a PDSCH communication, an NPDCCH communication, an MPDCCH communication, or an NPDSCH communication.

In a sixteenth aspect, alone or in combination with one or more of the first through fifteenth aspects, receiving the downlink communication based at least in part on the configurable gap comprises receiving (e.g., using antenna 252, DEMOD 254, MIMO detector 256, receive processor 258, controller/processor 280, memory 282, reception component 1002, and/or the like) a first portion of the downlink communication prior to the configurable gap, refraining from receiving (e.g., using antenna 252, DEMOD 254, MIMO detector 256, receive processor 258, controller/processor 280, memory 282, reception component 1002, and/or the like) the downlink communication during the configurable gap, and receiving (e.g., using antenna 252, DEMOD 254, MIMO detector 256, receive processor 258, controller/processor 280, memory 282, reception component 1002, and/or the like) a second portion of the downlink communication after the configurable gap. In a seventeenth aspect, alone or in combination with one or more of the first through sixteenth aspects, the configurable gap includes an amount of time or a set of one or more time-domain resources in which the UE is to refrain from receiving the downlink communication.

In an eighteenth aspect, alone or in combination with one or more of the first through seventeenth aspects, determining that the downlink communication is to be transmitted to the UE with the configurable gap comprises determining (e.g., using receive processor 258, transmit processor 264, controller/processor 280, memory 282, determination component 1008, and/or the like) that the downlink communication is to span a plurality of subframes or slots, determining (e.g., using receive processor 258, transmit processor 264, controller/processor 280, memory 282, determination component 1008, and/or the like) that reception of the downlink communication is to overlap at least one of transmission of an uplink communication or one or more guard intervals for the uplink communication in a subset of the plurality of subframes or slots, and determining (e.g., using receive processor 258, transmit processor 264, controller/processor 280, memory 282, determination component 1008, and/or the like) that the downlink communication is to be transmitted to the UE with the configurable gap based at least in part on determining that reception of the downlink communication is to overlap at least one of the transmission of the uplink communication or the one or more guard intervals in the subset of the plurality of subframes or slots.

Although Fig. 8 shows example blocks of process 800, in some aspects, process 800 may include additional blocks, fewer blocks, different blocks, or differently arranged blocks than those depicted in Fig. 8. Additionally, or alternatively, two or more of the blocks of process 800 may be performed in parallel.

Fig. 9 is a diagram illustrating process 900 performed by a UE, in accordance with the invention. In process 900 the UE (e.g., UE 120) performs operations associated with scheduling with configurable gaps in non-terrestrial networks.

As shown in Fig. 9, process 900 includes determining that an uplink communication is to be transmitted with a configurable gap (block 910). For example, the UE (e.g., using antenna 252, demodulator 254, MIMO detector 256, receive processor 258, controller/processor 280, memory 282, reception component 1002, and/or the like) may determine that an uplink communication is to be transmitted with a configurable gap, as described above.

As further shown in Fig. 9, process 900 includes determining the configurable gap (block 920). For example, the UE (e.g., using receive processor 258, transmit processor 264, controller/processor 280, memory 282, determination component 1008, and/or the like) may determine the configurable gap, as described above.

As further shown in Fig. 9, process 900 includes transmitting the uplink communication based at least in part on the configurable gap (block 930). For example, the UE (e.g., using antenna 252, transmit processor 264, TX MIMO processor 266, modulator 254, controller/processor 280, memory 282, transmission component 1004, and/or the like) may transmit the uplink communication based at least in part on the configurable gap, as described above.

Process 900 may include additional aspects, such as any single aspect or any combination of aspects described below and/or in connection with one or more other processes described elsewhere herein.

In a first aspect, the configurable gap is dynamically configured and activated for the uplink communication. In a second aspect, alone or in combination with the first aspect, a time duration of the configurable gap is dynamically configured for the configurable gap. In a third aspect, alone or in combination with one or more of the first and second aspects, at least one of is configured for the configurable gap: a time-domain location of the configurable gap relative to a transmission time of the uplink communication, or a time duration of the configurable gap.

In a fourth aspect, alone or in combination with one or more of the first through third aspects, process 900 includes receiving (e.g., using antenna 252, DEMOD 254, MIMO detector 256, receive processor 258, controller/processor 280, memory 282, reception component 1002, and/or the like) an indication that the uplink communication is to be transmitted by the UE with the configurable gap, and determining that the uplink communication is to be transmitted by the UE with the configurable gap comprises determining (e.g., using receive processor 258, transmit processor 264, controller/processor 280, memory 282, determination component 1008, and/or the like) that the uplink communication is to be transmitted by the UE with the configurable gap based at least in part on the indication. In a fifth aspect, alone or in combination with one or more of the first through fourth aspects, receiving the indication comprises receiving (e.g., using antenna 252, DEMOD 254, MIMO detector 256, receive processor 258, controller/processor 280, memory 282, reception component 1002, and/or the like) the indication in at least one of a DCI communication from a non-terrestrial base station, a MAC-CE communication from the non-terrestrial base station, or an RRC communication from the non-terrestrial base station.

In a sixth aspect, alone or in combination with one or more of the first through fifth aspects, process 900 includes receiving (e.g., using antenna 252, DEMOD 254, MIMO detector 256, receive processor 258, controller/processor 280, memory 282, reception component 1002, and/or the like) an explicit indication of the configurable gap, and determining the configurable gap comprises determining (e.g., using receive processor 258, transmit processor 264, controller/processor 280, memory 282, determination component 1008, and/or the like) the configurable gap based at least in part on an explicit indication of the configurable gap. In a seventh aspect, alone or in combination with one or more of the first through sixth aspects, the explicit indication of the configurable gap identifies at least one of one or more starting locations of the configurable gap, one or more ending locations of the configurable gap, or one or more time durations of the configurable gap.

In an eighth aspect, alone or in combination with one or more of the first through seventh aspects, determining the configurable gap comprises identifying (e.g., using receive processor 258, transmit processor 264, controller/processor 280, memory 282, determination component 1008, and/or the like) one or more time-domain resources in which reception of a downlink communication is to at least partially overlap with transmission of the uplink communication, and determining (e.g., using receive processor 258, transmit processor 264, controller/processor 280, memory 282, determination component 1008, and/or the like) the one or more time-domain resources as the configurable gap based at least in part on determining that the downlink communication is to be transmitted over the one or more time-domain resources.

In an ninth aspect, alone or in combination with one or more of the first through eighth aspects, determining the configurable gap comprises identifying (e.g., using receive processor 258, transmit processor 264, controller/processor 280, memory 282, determination component 1008, and/or the like) at least one of one or more guard-interval time-domain resources, prior to the one or more time-domain resources or after the one or more time-domain resources, as being included in the configurable gap. In a tenth aspect, alone or in combination with one or more of the first through ninth aspects, the uplink communication spans a plurality of subframes or slots, and at least a portion of the plurality of subframes or slots are postponed based at least in part the configurable gap. In an eleventh aspect, alone or in combination with one or more of the first through tenth aspects, the plurality of subframes or slots are based at least in part on at least one of a quantity of slots aggregated for the uplink communication, a quantity of repetitions of the uplink communication, or a quantity of subframes of the uplink communication.

In a twelfth aspect, alone or in combination with one or more of the first through eleventh aspects, the UE communicates over a non-terrestrial network, and transmitting the uplink communication comprises transmitting (e.g., using controller/processor 280, transmit processor 264, TX MIMO processor 266, MOD 254, antenna 252, memory 282, transmission component 1004, and/or the like) the uplink communication to a satellite of the non-terrestrial network. In an thirteenth aspect, alone or in combination with one or more of the first through twelfth aspects, according to the invention, one or more parameters of the configurable gap are different than a fixed transmission gap for terrestrial networks.

In a fourteenth aspect, alone or in combination with one or more of the first through thirteenth aspects, determining the configurable gap comprises determining (e.g., using receive processor 258, transmit processor 264, controller/processor 280, memory 282, determination component 1008, and/or the like) the configurable gap based at least in part on a timing misalignment between an uplink timeline associated with the UE and a downlink timeline associated with the UE. In a fifteenth aspect, alone or in combination with one or more of the first through fourteenth aspects, the uplink communication comprises a PUCCH communication, a PUSCH communication, an MPUCCH, or an NPUSCH communication.

In a sixteenth aspect, alone or in combination with one or more of the first through fifteenth aspects, transmitting the uplink communication based at least in part on the configurable gap comprises transmitting (e.g., using controller/processor 280, transmit processor 264, TX MIMO processor 266, MOD 254, antenna 252, memory 282, transmission component 1004, and/or the like) a first portion of the uplink communication prior to the configurable gap, refraining from transmitting (e.g., using controller/processor 280, transmit processor 264, TX MIMO processor 266, MOD 254, antenna 252, memory 282, transmission component 1004, and/or the like) the uplink communication during the configurable gap, and transmitting (e.g., using controller/processor 280, transmit processor 264, TX MIMO processor 266, MOD 254, antenna 252, memory 282, transmission component 1004, and/or the like) a second portion of the uplink communication after the configurable gap. In a seventeenth aspect, alone or in combination with one or more of the first through sixteenth aspects, the configurable gap includes an amount of time or a set of one or more time-domain resources in which the UE is to refrain from transmitting the uplink communication.

In an eighteenth aspect, alone or in combination with one or more of the first through seventeenth aspects, configurable gap comprises determining (e.g., using receive processor 258, transmit processor 264, controller/processor 280, memory 282, determination component 1008, and/or the like) that the uplink communication is to span a plurality of subframes or slots, determining (e.g., using receive processor 258, transmit processor 264, controller/processor 280, memory 282, determination component 1008, and/or the like) that transmission of the uplink communication is to overlap at least one of reception of a downlink communication or one or more guard intervals for the downlink communication in a subset of the plurality of subframes or slots, and determining (e.g., using receive processor 258, transmit processor 264, controller/processor 280, memory 282, determination component 1008, and/or the like) that the uplink communication is to be transmitted to the UE with the configurable gap based at least in part on determining that transmission of the uplink communication is to overlap at least one of the reception of the downlink communication or the one or more guard intervals in the subset of the plurality of subframes or slots. In a nineteenth aspect, alone or in combination with one or more of the first through nineteenth aspects, process 900 includes monitoring (e.g., using antenna 252, DEMOD 254, MIMO detector 256, receive processor 258, controller/processor 280, memory 282, reception component 1002, and/or the like) for downlink transmissions during the configurable gap.

Although Fig. 9 shows example blocks of process 900, in some aspects, process 900 may include additional blocks, fewer blocks, different blocks, or differently arranged blocks than those depicted in Fig. 9. Additionally, or alternatively, two or more of the blocks of process 900 may be performed in parallel.

Fig. 10 is a block diagram of an example apparatus 1000 for wireless communication. The apparatus 1000 may be a UE (e.g., UE 120), or a UE may include the apparatus 1000. In some aspects, the apparatus 1000 includes a reception component 1002 and a transmission component 1004, which may be in communication with one another (for example, via one or more buses and/or one or more other components). As shown, the apparatus 1000 may communicate with another apparatus 1006 (such as a UE 120, a base station 110, a satellite 110, a satellite 420, or another wireless communication device) using the reception component 1002 and the transmission component 1004. As further shown, the apparatus 1000 may include a determination component 1008.

In some aspects, the apparatus 1000 may be configured to perform one or more operations described herein in connection with Figs. 6A-6C and/or 7A-7C. Additionally or alternatively, the apparatus 1000 may be configured to perform one or more processes described herein, such as process 800 of Fig. 8, process 900 of Fig. 9, or a combination thereof. In some aspects, the apparatus 1000 and/or one or more components shown in Fig. 10 may include one or more components of the UE described above in connection with Fig. 2. Additionally, or alternatively, one or more components shown in Fig. 10 may be implemented within one or more components described above in connection with Fig. 2. Additionally or alternatively, one or more components of the set of components may be implemented at least in part as software stored in a memory. For example, a component (or a portion of a component) may be implemented as instructions or code stored in a non-transitory computer-readable medium and executable by a controller or a processor to perform the functions or operations of the component.

The reception component 1002 may receive communications, such as reference signals, control information, data communications, or a combination thereof, from the apparatus 1006. The reception component 1002 may provide received communications to one or more other components of the apparatus 1000. In some aspects, the reception component 1002 may perform signal processing on the received communications (such as filtering, amplification, demodulation, analog-to-digital conversion, demultiplexing, deinterleaving, de-mapping, equalization, interference cancellation, or decoding, among other examples), and may provide the processed signals to the one or more other components of the apparatus 1006. In some aspects, the reception component 1002 may include one or more antennas 252, a DEMOD 254, a MIMO detector 256, a receive processor 258, a controller/processor 280, a memory 282, or a combination thereof, of the UE 120 described above in connection with Fig. 2.

The transmission component 1004 may transmit communications, such as reference signals, control information, data communications, or a combination thereof, to the apparatus 1006. In some aspects, one or more other components of the apparatus 1006 may generate communications and may provide the generated communications to the transmission component 1004 for transmission to the apparatus 1006. In some aspects, the transmission component 1004 may perform signal processing on the generated communications (such as filtering, amplification, modulation, digital-to-analog conversion, multiplexing, interleaving, mapping, or encoding, among other examples), and may transmit the processed signals to the apparatus 1006. In some aspects, the transmission component 1004 may include one or more antennas 252, a MOD 254, a transmit processor 264, a TX MIMO processor 266, a controller/processor 280, a memory 282, or a combination thereof, of the UE 120 described above in connection with Fig. 2. In some aspects, the transmission component 1004 may be collocated with the reception component 1002 in a transceiver.

In some aspects, the determination component 1008 determines a configurable gap for a downlink communication from the apparatus 1006. In some aspects, the determination component 1008 may determine the configurable gap based at least in part on the determination component 1008 determining that the downlink communication is to be transmitted to the apparatus 1000 with the configurable gap. In some aspects, the determination component 1008 may determine the configurable gap based at least in part on the reception component 1002 receiving an indication that the downlink communication is to be transmitted to the apparatus 1000 with the configurable gap. In some aspects, the reception component 1002 may receive the downlink communication from the apparatus 1006 based at least in part on the configurable gap.

In some aspects, the determination component 1008 determines a configurable gap for an uplink communication that is to be transmitted to the apparatus 1006. In some aspects, the determination component 1008 may determine the configurable gap based at least in part on the determination component 1008 determining that the uplink communication is to be transmitted by the apparatus 1000 with the configurable gap. In some aspects, the determination component 1008 may determine the configurable gap based at least in part on the reception component 1002 receiving an indication that the uplink communication is to be transmitted with the configurable gap. In some aspects, the transmission component 1004 may transmit the uplink communication to the apparatus 1006 based at least in part on the configurable gap.

The determination component 1008 may include a memory. In some aspects, the determination component 1008 may include a receive processor 258, a transmit processor 264, a controller/processor 280, a memory 282, or a combination thereof, of the UE 120 described above in connection with Fig. 2. The determination component 1008 may include one or more instructions that, when executed by one or more processors of a UE, cause the UE to determine a configurable gap. The determination component 1008 may include means for determining a configurable gap.

The number and arrangement of components shown in Fig. 10 are provided as an example. In practice, there may be additional components, fewer components, different components, or differently arranged components than those shown in Fig. 10. Furthermore, two or more components shown in Fig. 10 may be implemented within a single component, or a single component shown in Fig. 10 may be implemented as multiple, distributed components. Additionally or alternatively, a set of (one or more) components shown in Fig. 10 may perform one or more functions described as being performed by another set of components shown in Fig. 10.

The foregoing disclosure provides illustration and description, but is not intended to be exhaustive or to limit the aspects to the precise forms disclosed. Modifications and variations may be made in light of the above disclosure or may be acquired from practice of the aspects.

As used herein, the term "component" is intended to be broadly construed as hardware and/or a combination of hardware and software. "Software" shall be construed broadly to mean instructions, instruction sets, code, code segments, program code, programs, subprograms, software modules, applications, software applications, software packages, routines, subroutines, objects, executables, threads of execution, procedures, and/or functions, among other examples, whether referred to as software, firmware, middleware, microcode, hardware description language, or otherwise. As used herein, a processor is implemented in hardware and/or a combination of hardware and software. It will be apparent that systems and/or methods described herein may be implemented in different forms of hardware and/or a combination of hardware and software. The actual specialized control hardware or software code used to implement these systems and/or methods is not limiting of the aspects. Thus, the operation and behavior of the systems and/or methods were described herein without reference to specific software code-it being understood that software and hardware can be designed to implement the systems and/or methods based, at least in part, on the description herein.

As used herein, satisfying a threshold may, depending on the context, refer to a value being greater than the threshold, greater than or equal to the threshold, less than the threshold, less than or equal to the threshold, equal to the threshold, not equal to the threshold, or the like.

Even though particular combinations of features are recited in the claims and/or disclosed in the specification, these combinations are not intended to limit the disclosure of various aspects. In fact, many of these features may be combined in ways not specifically recited in the claims and/or disclosed in the specification. Although each dependent claim listed below may directly depend on only one claim, the disclosure of various aspects includes each dependent claim in combination with every other claim in the claim set. As used herein, a phrase referring to "at least one of" a list of items refers to any combination of those items, including single members. As an example, "at least one of: a, b, or c" is intended to cover a, b, c, a-b, a-c, b-c, and a-b-c, as well as any combination with multiples of the same element (e.g., a-a, a-a-a, a-a-b, a-a-c, a-b-b, a-c-c, b-b, b-b-b, b-b-c, c-c, and c-c-c or any other ordering of a, b, and c).

No element, act, or instruction used herein should be construed as critical or essential unless explicitly described as such. Also, as used herein, the articles "a" and "an" are intended to include one or more items and may be used interchangeably with "one or more." Further, as used herein, the article "the" is intended to include one or more items referenced in connection with the article "the" and may be used interchangeably with "the one or more." Furthermore, as used herein, the terms "set" and "group" are intended to include one or more items (e.g., related items, unrelated items, or a combination of related and unrelated items), and may be used interchangeably with "one or more." Where only one item is intended, the phrase "only one" or similar language is used. Also, as used herein, the terms "has," "have," "having," or the like are intended to be open-ended terms. Further, the phrase "based on" is intended to mean "based, at least in part, on" unless explicitly stated otherwise. Also, as used herein, the term "or" is intended to be inclusive when used in a series and may be used interchangeably with "and/or," unless explicitly stated otherwise (e.g., if used in combination with "either" or "only one of').

## Claims

1. A user equipment, UE (120), for wireless communication over a non-terrestrial network, comprising:
a memory; and
one or more processors, coupled to the memory, configured to:
determine (810) that a downlink communication is to be transmitted to the UE (120) with a configurable gap;
determine (820) the configurable gap; and
receive (830) the downlink communication from a satellite (110) of the non-terrestrial network based at least in part on the configurable gap, wherein one or more parameters of the configurable gap are different than a fixed transmission gap for terrestrial networks.

2. The UE (120) of claim 1, wherein the configurable gap is dynamically configured and activated for the downlink communication, or
wherein a time duration of the configurable gap is dynamically configured for the configurable gap.

3. The UE (120) of claim 1, wherein the one or more processors are further configured to:
receive an indication that the downlink communication is to be transmitted to the UE (120) with the configurable gap; and
wherein the one or more processors, to determine that the downlink communication is to be transmitted to the UE (120) with the configurable gap, are configured to:
determine that the downlink communication is to be transmitted to the UE (120) with the configurable gap based at least in part on the indication.

4. The UE (120) of claim 1, wherein the one or more processors are further configured to:
receive an explicit indication of the configurable gap;
wherein the one or more processors, to determine the configurable gap, are configured to:
determine the configurable gap based at least in part on the explicit indication of the configurable gap; and
wherein the explicit indication of the configurable gap identifies at least one of:
one or more starting locations of the configurable gap,
one or more ending locations of the configurable gap, or
one or more time durations of the configurable gap.

5. The UE (120) of claim 1, wherein the one or more processors, to determine the configurable gap, are configured to:
identify one or more time-domain resources in which transmission of an uplink communication is to at least partially overlap with reception of the downlink communication; and
determine the one or more time-domain resources as the configurable gap based at least in part on determining that the uplink communication is to be transmitted over the one or more time-domain resources; and
identify at least one of one or more guard-interval time-domain resources, prior to the one or more time-domain resources or after the one or more time-domain resources, as being included in the configurable gap.

6. The UE (120) of claim 1, wherein the one or more processors, to determine that the downlink communication is to be transmitted to the UE (120) with the configurable gap, are configured to:
determine that the downlink communication is to span a plurality of subframes or slots;
determine that reception of the downlink communication is to overlap at least one of transmission of an uplink communication or one or more guard intervals for the uplink communication in a subset of the plurality of subframes or slots; and
determine that the downlink communication is to be transmitted to the UE (120) with the configurable gap based at least in part on determining that reception of the downlink communication is to overlap at least one of the transmission of the uplink communication or the one or more guard intervals in the subset of the plurality of subframes or slots.

7. A UE (120) for wireless communication over a non-terrestrial network, comprising:
a memory; and
one or more processors, coupled to the memory, configured to:
determine that an uplink communication is to be transmitted with a configurable gap to a satellite (110) in the non-terrestrial network;
determine the configurable gap; and
transmit the uplink communication based at least in part on the configurable gap, wherein one or more parameters of the configurable gap are different than a fixed transmission gap for terrestrial networks.

8. The UE (120) of claim 7, wherein the configurable gap is dynamically configured and activated for the uplink communication, or
wherein a time duration of the configurable gap is dynamically configured for the configurable gap.

9. The UE (120) of claim 7, wherein the one or more processors are further configured to:
receive an indication that the uplink communication is to be transmitted by the UE (120) with the configurable gap; and
wherein the one or more processors, to determine that the uplink communication is to be transmitted by the UE (120) with the configurable gap, are configured to:
determine that the uplink communication is to be transmitted by the UE (120) with the configurable gap based at least in part on the indication.

10. The UE (120) of claim 7, wherein the one or more processors are further configured to:
receive an explicit indication of the configurable gap;
wherein the one or more processors, to determine the configurable gap, are configured to:
determine the configurable gap based at least in part on the explicit indication of the configurable gap; and
wherein the explicit indication of the configurable gap identifies at least one of:
one or more starting locations of the configurable gap,
one or more ending locations of the configurable gap, or
one or more time durations of the configurable gap.

11. The UE (120) of claim 7, wherein the one or more processors, to determine the configurable gap, are configured to:
identify one or more time-domain resources in which reception of a downlink communication is to at least partially overlap with transmission of the uplink communication; and
determine the one or more time-domain resources as the configurable gap based at least in part on determining that the downlink communication is to be transmitted over the one or more time-domain resources; and
identify at least one of one or more guard-interval time-domain resources, prior to the one or more time-domain resources or after the one or more time-domain resources, as being included in the configurable gap.

12. The UE (120) of claim 7, wherein the uplink communication spans a plurality of subframes or slots;
wherein at least a portion of the plurality of subframes or slots are postponed based at least in part the configurable gap; and
wherein the plurality of subframes or slots are based at least in part on at least one of:
a quantity of slots aggregated for the uplink communication,
a quantity of repetitions of the uplink communication, or
a quantity of subframes of the uplink communication.

13. The UE (120) of claim 7, wherein the one or more processors, to determine that the uplink communication is to be transmitted by the UE (120) with the configurable gap, are configured to:
determine that the uplink communication is to span a plurality of subframes or slots;
determine that transmission of the uplink communication is to overlap at least one of reception of a downlink communication or one or more guard intervals for the downlink communication in a subset of the plurality of subframes or slots; and
determine that the uplink communication is to be transmitted to the UE (120) with the configurable gap based at least in part on determining that transmission of the uplink communication is to overlap at least one of the reception of the downlink communication or the one or more guard intervals in the subset of the plurality of subframes or slots.

14. A method of wireless communication over a non-terrestrial network performed by a user equipment, UE (120), comprising:
determining (810) that a downlink communication is to be transmitted to the UE (120) with a configurable gap;
determining (820) the configurable gap; and
receiving (830) the downlink communication from a satellite (110) of the non-terrestrial network based at least in part on the configurable gap, wherein one or more parameters of the configurable gap are different than a fixed transmission gap for terrestrial networks.

15. A method of wireless communication over a non-terrestrial network performed by a user equipment, UE (120), comprising:
determining (910) that an uplink communication is to be transmitted with a configurable gap;
determining (920) the configurable gap; and
transmitting (930) the uplink communication to a satellite (110) in the non-terrestrial network based at least in part on the configurable gap, wherein one or more parameters of the configurable gap are different than a fixed transmission gap for terrestrial networks.

## Patentansprüche

1. Ein Benutzergerät, UE (120), zur drahtlosen Kommunikation über ein nicht-terrestrisches Netzwerk, aufweisend:
einen Speicher; und
einen oder mehrere Prozessoren, gekoppelt mit dem Speicher, konfiguriert zum:
Bestimmen (810), dass eine Abwärtsverbindungs-Kommunikation zu übertragen ist an das UE (120) mit einer konfigurierbaren Lücke;
Bestimmen (820) der konfigurierbaren Lücke; und
Empfangen (830) der Abwärtsverbindungs-Kommunikation von einem Satelliten (110) des nicht-terrestrischen Netzwerks basierend zumindest teilweise auf der konfigurierbaren Lücke, wobei ein oder mehrere Parameter der konfigurierbaren Lücke verschieden sind von einer festen Übertragungslücke für terrestrische Netzwerke.

2. Das UE (120) nach Anspruch 1, wobei die konfigurierbare Lücke dynamisch konfiguriert und aktiviert wird für die Abwärtsverbindungs-Kommunikation, oder
wobei eine Zeitdauer der konfigurierbaren Lücke dynamisch konfiguriert wird für die konfigurierbare Lücke.

3. Das UE (120) nach Anspruch 1, wobei der eine oder die mehreren Prozessoren weiter konfiguriert sind zum:
Empfangen einer Anzeige, dass die Abwärtsverbindungs-Kommunikation zu übertragen ist an das UE (120) mit der konfigurierbaren Lücke; und
wobei der eine oder die mehreren Prozessoren, zum Bestimmen, dass die Abwärtsverbindungs-Kommunikation zu übertragen ist an das UE (120) mit der konfigurierbaren Lücke, konfiguriert sind zum:
Bestimmen, dass die Abwärtsverbindungs-Kommunikation zu übertragen ist an das UE (120) mit der konfigurierbaren Lücke basierend zumindest teilweise auf der Anzeige.

4. Das UE (120) nach Anspruch 1, wobei der eine oder die mehreren Prozessoren weiter konfiguriert sind zum:
Empfangen einer expliziten Anzeige der konfigurierbaren Lücke;
wobei der eine oder die mehreren Prozessoren, zum Bestimmen der konfigurierbaren Lücke, konfiguriert sind zum:
Bestimmen der konfigurierbaren Lücke basierend zumindest teilweise auf der expliziten Anzeige der konfigurierbaren Lücke; und
wobei die explizite Anzeige der konfigurierbaren Lücke zumindest eines identifiziert von:
einem oder mehreren Startorten der konfigurierbaren Lücke,
einem oder mehreren Endorten der konfigurierbaren Lücke, oder
einer oder mehreren Zeitdauern der konfigurierbaren Lücke.

5. Das UE (120) nach Anspruch 1, wobei der eine oder die mehreren Prozessoren, zum Bestimmen der konfigurierbaren Lücke, konfiguriert sind zum:
Identifizieren einer oder mehrerer Zeitbereichsressourcen, in denen Übertragung einer Aufwärtsverbindungs-Kommunikation zumindest teilweise mit einem Empfang der Abwärtsverbindungs-Kommunikation überlappen soll; und
Bestimmen der einen oder der mehreren Zeitbereichsressourcen als die konfigurierbare Lücke basierend zumindest teilweise auf Bestimmen, dass die Aufwärtsverbindungs-Kommunikation zu übertragen ist über die eine oder die mehreren Zeitbereichsressourcen; und
Identifizieren zumindest einer von einer oder mehreren Schutzintervall-Zeitbereichsressourcen, vor der einen oder den mehreren Zeitbereichsressourcen oder nach der einen oder den mehreren Zeitbereichsressourcen, als in der konfigurierbaren Lücke enthalten.

6. Das UE (120) nach Anspruch 1, wobei der eine oder die mehreren Prozessoren, zum Bestimmen, dass die Abwärtsverbindungs-Kommunikation zu übertragen ist an das UE (120) mit der konfigurierbaren Lücke, konfiguriert sind zum:
Bestimmen, dass die Abwärtsverbindungs-Kommunikation eine Vielzahl von Unterrahmen oder Schlitzen überspannen soll;
Bestimmen, dass Empfang der Abwärtsverbindungs-Kommunikation mindestens eines überlappen soll von Übertragung einer Aufwärtsverbindungs-Kommunikation oder einem oder mehreren Schutzintervallen für die Aufwärtsverbindungs-Kommunikation in einer Teilmenge der Vielzahl von Unterrahmen oder Schlitzen; und
Bestimmen, dass die Abwärtsverbindungs-Kommunikation zu übertragen ist an das UE (120) mit der konfigurierbaren Lücke basierend zumindest teilweise auf Bestimmen, dass Empfang der Abwärtsverbindungs-Kommunikation mindestens eines überlappen soll von der Übertragung der Aufwärtsverbindungs-Kommunikation oder dem einen oder den mehreren Schutzintervallen in der Teilmenge der Vielzahl von Unterrahmen oder Schlitzen.

7. Ein UE (120) zur drahtlosen Kommunikation über ein nicht-terrestrisches Netzwerk, aufweisend:
einen Speicher; und
einen oder mehrere Prozessoren, gekoppelt mit dem Speicher, konfiguriert zum:
Bestimmen, dass eine Aufwärtsverbindungs-Kommunikation zu übertragen ist mit einer konfigurierbaren Lücke an einen Satelliten (110) in dem nicht-terrestrischen Netzwerk;
Bestimmen der konfigurierbaren Lücke; und
Übertragen der Aufwärtsverbindungs-Kommunikation basierend zumindest teilweise auf der konfigurierbaren Lücke, wobei ein oder mehrere Parameter der konfigurierbaren Lücke verschieden sind von einer festen Übertragungslücke für terrestrische Netzwerke.

8. Das UE (120) nach Anspruch 7, wobei die konfigurierbare Lücke dynamisch konfiguriert und aktiviert wird für die Aufwärtsverbindungs-Kommunikation, oder
wobei eine Zeitdauer der konfigurierbaren Lücke dynamisch konfiguriert wird für die konfigurierbare Lücke.

9. Das UE (120) nach Anspruch 7, wobei der eine oder die mehreren Prozessoren weiter konfiguriert sind zum:
Empfangen einer Anzeige, dass die Aufwärtsverbindungs-Kommunikation zu übertragen ist durch das UE (120) mit der konfigurierbaren Lücke; und
wobei der eine oder die mehreren Prozessoren, zum Bestimmen, dass die Aufwärtsverbindungs-Kommunikation zu übertragen ist durch das UE (120) mit der konfigurierbaren Lücke, konfiguriert sind zum:
Bestimmen, dass die Aufwärtsverbindungs-Kommunikation zu übertragen ist durch das UE (120) mit der konfigurierbaren Lücke basierend zumindest teilweise auf der Anzeige.

10. Das UE (120) nach Anspruch 7, wobei der eine oder die mehreren Prozessoren weiter konfiguriert sind zum:
Empfangen einer expliziten Anzeige der konfigurierbaren Lücke;
wobei der eine oder die mehreren Prozessoren, zum Bestimmen der konfigurierbaren Lücke, konfiguriert sind zum:
Bestimmen der konfigurierbaren Lücke basierend zumindest teilweise auf der expliziten Anzeige der konfigurierbaren Lücke; und
wobei die explizite Anzeige der konfigurierbaren Lücke zumindest eines identifiziert von:
einem oder mehreren Startorten der konfigurierbaren Lücke,
einem oder mehreren Endorten der konfigurierbaren Lücke, oder
einer oder mehreren Zeitdauern der konfigurierbaren Lücke.

11. Das UE (120) nach Anspruch 7, wobei der eine oder die mehreren Prozessoren, zum Bestimmen der konfigurierbaren Lücke, konfiguriert sind zum:
Identifizieren einer oder mehrerer Zeitbereichsressourcen, in denen Empfang einer Abwärtsverbindungs-Kommunikation zumindest teilweise mit Übertragung der Aufwärtsverbindungs-Kommunikation überlappen soll; und
Bestimmen der einen oder der mehreren Zeitbereichsressourcen als die konfigurierbare Lücke basierend zumindest teilweise auf Bestimmen, dass die Abwärtsverbindungs-Kommunikation zu übertragen ist über die eine oder die mehreren Zeitbereichsressourcen; und
Identifizieren zumindest einer von einer oder mehreren Schutzintervall-Zeitbereichsressourcen, vor der einen oder den mehreren Zeitbereichsressourcen oder nach der einen oder den mehreren Zeitbereichsressourcen, als in der konfigurierbaren Lücke enthalten.

12. Das UE (120) nach Anspruch 7, wobei die Aufwärtsverbindungs-Kommunikation eine Vielzahl von Unterrahmen oder Schlitzen überspannt; wobei zumindest ein Teil der Vielzahl von Unterrahmen oder Schlitzen nach hinten geschoben wird basierend zumindest teilweise auf der konfigurierbaren Lücke; und
wobei die Vielzahl von Unterrahmen oder Schlitzen basiert zumindest teilweise auf zumindest einem von:
einer Menge von Schlitzen, die für die Aufwärtsverbindungs-Kommunikation aggregiert sind,
einer Menge von Wiederholungen der Aufwärtsverbindungs-Kommunikation, oder
einer Menge von Unterrahmen der Aufwärtsverbindungs-Kommunikation.

13. Das UE (120) nach Anspruch 7, wobei der eine oder die mehreren Prozessoren, zum Bestimmen, dass die Aufwärtsverbindungs-Kommunikation zu übertragen ist durch das UE (120) mit der konfigurierbaren Lücke, konfiguriert sind zum:
Bestimmen, dass die Aufwärtsverbindungs-Kommunikation eine Vielzahl von Unterrahmen oder Schlitzen überspannen soll;
Bestimmen, dass Übertragung der Aufwärtsverbindungs-Kommunikation mindestens eines überlappen soll von Empfang einer Abwärtsverbindungs-Kommunikation oder einem oder mehreren Schutzintervallen für die Abwärtsverbindungs-Kommunikation in einer Teilmenge der Vielzahl von Unterrahmen oder Schlitzen; und
Bestimmen, dass die Aufwärtsverbindungs-Kommunikation zu übertragen ist an das UE (120) mit der konfigurierbaren Lücke basierend zumindest teilweise auf Bestimmen, dass Übertragung der Aufwärtsverbindungs-Kommunikation mindestens eines überlappen soll von dem Empfang der Abwärtsverbindungs-Kommunikation oder dem einen oder den mehreren Schutzintervallen in dem Teilsatz der Vielzahl von Unterrahmen oder Schlitzen.

14. Ein Verfahren zur drahtlosen Kommunikation über ein nicht-terrestrisches Netzwerk, durchgeführt durch ein Benutzergerät, UE (120), aufweisend:
Bestimmen (810), dass eine Abwärtsverbindungs-Kommunikation zu übertragen ist an das UE (120) mit einer konfigurierbaren Lücke;
Bestimmen (820) der konfigurierbaren Lücke; und
Empfangen (830) der Abwärtsverbindungs-Kommunikation von einem Satelliten (110) des nicht-terrestrischen Netzwerks basierend zumindest teilweise auf der konfigurierbaren Lücke, wobei ein oder mehrere Parameter der konfigurierbaren Lücke verschieden sind von einer festen Übertragungslücke für terrestrische Netzwerke.

15. Ein Verfahren zur drahtlosen Kommunikation über ein nicht-terrestrisches Netzwerk, durchgeführt durch ein Benutzergerät, UE (120), aufweisend:
Bestimmen (910), dass eine Aufwärtsverbindungs-Kommunikation zu übertragen ist mit einer konfigurierbaren Lücke;
Bestimmen (920) der konfigurierbaren Lücke; und
Übertragen (930) der Aufwärtsverbindungs-Kommunikation an einen Satelliten (110) in dem nicht-terrestrischen Netzwerk basierend zumindest teilweise auf der konfigurierbaren Lücke, wobei ein oder mehrere Parameter der konfigurierbaren Lücke verschieden sind von einer festen Übertragungslücke für terrestrische Netzwerke.

## Revendications

1. Un équipement utilisateur, UE (120), pour la communication sans fil sur un réseau non terrestre, comprenant :
une mémoire ; et
un ou plusieurs processeurs, couplés à la mémoire, configurés pour :
déterminer (810) qu'une communication de liaison descendante doit être transmise à l'UE (120) avec un intervalle configurable ;
déterminer (820) l'intervalle configurable ; et
recevoir (830) la communication de liaison descendante à partir d'un satellite (110) du réseau non terrestre sur la base au moins en partie de l'intervalle configurable, dans lequel un ou plusieurs paramètres de l'intervalle configurable sont différents d'un intervalle de transmission fixe pour des réseaux terrestres.

2. L'UE (120) selon la revendication 1, dans lequel l'intervalle configurable est configuré et activé dynamiquement pour la communication de liaison descendante, ou
dans lequel une durée de l'intervalle configurable est configurée dynamiquement pour l'intervalle configurable.

3. L'UE (120) selon la revendication 1, dans lequel les un ou plusieurs processeurs sont en outre configurés pour :
recevoir une indication que la communication de liaison descendante doit être transmise à l'UE (120) avec l'intervalle configurable ; et
dans lequel les un ou plusieurs processeurs, pour déterminer que la communication de liaison descendante doit être transmise à l'UE (120) avec l'intervalle configurable, sont configurés pour :
déterminer que la communication de liaison descendante doit être transmise à l'UE (120) avec l'intervalle configurable sur la base au moins en partie de l'indication.

4. L'UE (120) selon la revendication 1, dans lequel les un ou plusieurs processeurs sont en outre configurés pour :
recevoir une indication explicite de l'intervalle configurable ;
dans lequel les un ou plusieurs processeurs, pour déterminer l'intervalle configurable, sont configurés pour :
déterminer l'intervalle configurable sur la base au moins en partie de l'indication explicite de l'intervalle configurable ; et
dans lequel l'indication explicite de l'intervalle configurable identifie au moins un parmi :
un ou plusieurs emplacements de début de l'intervalle configurable,
un ou plusieurs emplacements de fin de l'intervalle configurable, ou
une ou plusieurs durées de l'intervalle configurable.

5. L'UE (120) selon la revendication 1, dans lequel les un ou plusieurs processeurs, pour déterminer l'intervalle configurable, sont configurés pour :
identifier une ou plusieurs ressources de domaine temporel dans lesquelles une transmission d'une communication de liaison montante doit chevaucher au moins partiellement une réception de la communication de liaison descendante ; et
déterminer les une ou plusieurs ressources de domaine temporel comme l'intervalle configurable sur la base au moins en partie de la détermination que la communication de liaison montante doit être transmise sur les une ou plusieurs ressources de domaine temporel ; et
identifier au moins une parmi une ou plusieurs ressources de domaine temporel d'intervalle de garde, avant les une ou plusieurs ressources de domaine temporel ou après les une ou plusieurs ressources de domaine temporel, comme étant incluses dans l'intervalle configurable.

6. L'UE (120) selon la revendication 1, dans lequel les un ou plusieurs processeurs, pour déterminer que la communication de liaison descendante doit être transmise à l'UE (120) avec l'intervalle configurable, sont configurés pour :
déterminer que la communication de liaison descendante doit s'étendre sur une pluralité de sous-trames ou de slots ;
déterminer qu'une réception de la communication de liaison descendante doit chevaucher au moins un parmi une transmission d'une communication de liaison montante ou un ou plusieurs intervalles de garde pour la communication de liaison montante dans un sous-ensemble de la pluralité de sous-trames ou de slots ; et
déterminer que la communication de liaison descendante doit être transmise à l'UE (120) avec l'intervalle configurable sur la base au moins en partie de la détermination qu'une réception de la communication de liaison descendante doit chevaucher au moins un parmi la transmission de la communication de liaison montante ou les un ou plusieurs intervalles de garde dans le sous-ensemble de la pluralité de sous-trames ou de slots.

7. Un UE (120) pour la communication sans fil sur un réseau non terrestre, comprenant :
une mémoire ; et
un ou plusieurs processeurs, couplés à la mémoire, configurés pour :
déterminer qu'une communication de liaison montante doit être transmise avec un intervalle configurable à un satellite (110) dans le réseau non terrestre ;
déterminer l'intervalle configurable ; et
transmettre la communication de liaison montante sur la base au moins en partie de l'intervalle configurable, dans lequel un ou plusieurs paramètres de l'intervalle configurable sont différents d'un intervalle de transmission fixe pour des réseaux terrestres.

8. L'UE (120) selon la revendication 7, dans lequel l'intervalle configurable est configuré et activé dynamiquement pour la communication de liaison montante, ou
dans lequel une durée de l'intervalle configurable est configurée dynamiquement pour l'intervalle configurable.

9. L'UE (120) selon la revendication 7, dans lequel les un ou plusieurs processeurs sont en outre configurés pour :
recevoir une indication que la communication de liaison montante doit être transmise par l'UE (120) avec l'intervalle configurable ; et
dans lequel les un ou plusieurs processeurs, pour déterminer que la communication de liaison montante doit être transmise par l'UE (120) avec l'intervalle configurable, sont configurés pour :
déterminer que la communication de liaison montante doit être transmise par l'UE (120) avec l'intervalle configurable sur la base au moins en partie de l'indication.

10. L'UE (120) selon la revendication 7, dans lequel les un ou plusieurs processeurs sont en outre configurés pour :
recevoir une indication explicite de l'intervalle configurable ;
dans lequel les un ou plusieurs processeurs, pour déterminer l'intervalle configurable, sont configurés pour :
déterminer l'intervalle configurable sur la base au moins en partie de l'indication explicite de l'intervalle configurable ; et
dans lequel l'indication explicite de l'intervalle configurable identifie au moins un parmi :
un ou plusieurs emplacements de début de l'intervalle configurable,
un ou plusieurs emplacements de fin de l'intervalle configurable, ou
une ou plusieurs durées de l'intervalle configurable.

11. L'UE (120) selon la revendication 7, dans lequel les un ou plusieurs processeurs, pour déterminer l'intervalle configurable, sont configurés pour :
identifier une ou plusieurs ressources de domaine temporel dans lesquelles une réception d'une communication de liaison descendante doit chevaucher au moins partiellement une transmission de la communication de liaison montante ; et
déterminer les une ou plusieurs ressources de domaine temporel comme l'intervalle configurable sur la base au moins en partie de la détermination que la communication de liaison descendante doit être transmise sur les une ou plusieurs ressources de domaine temporel ; et
identifier au moins une parmi une ou plusieurs ressources de domaine temporel d'intervalle de garde, avant les une ou plusieurs ressources de domaine temporel ou après les une ou plusieurs ressources de domaine temporel, comme étant incluses dans l'intervalle configurable.

12. L'UE (120) selon la revendication 7, dans lequel la communication de liaison montante s'étend sur une pluralité de sous-trames ou de slots ;
dans lequel au moins une partie de la pluralité de sous-trames ou de slots est reportée sur la base d'au moins une partie de l'intervalle configurable ; et
dans lequel la pluralité de sous-trames ou de slots est basée au moins en partie sur au moins une parmi :
une quantité de slots agrégés pour la communication de liaison montante,
une quantité de répétitions de la communication montante, ou
une quantité de sous-trames de la communication de liaison montante.

13. L'UE (120) selon la revendication 7, dans lequel les un ou plusieurs processeurs, pour déterminer que la communication de liaison montante doit être transmise par l'UE (120) avec l'intervalle configurable, sont configurés pour :
déterminer que la communication de liaison montante doit s'étendre sur une pluralité de sous-trames ou de slots ;
déterminer qu'une transmission de la communication de liaison montante doit chevaucher au moins un parmi une réception d'une communication de liaison descendante ou un ou plusieurs intervalles de garde pour la communication de liaison descendante dans un sous-ensemble de la pluralité de sous-trames ou de slots ; et
déterminer que la communication de liaison montante doit être transmise à l'UE (120) avec l'intervalle configurable sur la base au moins en partie de la détermination qu'une transmission de la communication de liaison montante doit chevaucher au moins un parmi la réception de la communication de liaison descendante ou les un ou plusieurs intervalles de garde dans le sous-ensemble de la pluralité de sous-trames ou de slots.

14. Un procédé de communication sans fil sur un réseau non terrestre, réalisé par un équipement utilisateur, UE (120), comprenant :
la détermination (810) qu'une communication de liaison descendante doit être transmise à l'UE (120) avec un intervalle configurable ;
la détermination (820) de l'intervalle configurable ; et
la réception (830) de la communication de liaison descendante à partir d'un satellite (110) du réseau non terrestre sur la base au moins en partie de l'intervalle configurable, dans lequel un ou plusieurs paramètres de l'intervalle configurable sont différents d'un intervalle de transmission fixe pour des réseaux terrestres.

15. Un procédé de communication sans fil sur un réseau non terrestre, réalisé par un équipement utilisateur, UE (120), comprenant :
la détermination (910) qu'une communication de liaison montante doit être transmise avec un intervalle configurable ;
la détermination (920) de l'intervalle configurable ; et
la transmission (930) de la communication de liaison montante à un satellite (110) dans le réseau non terrestre sur la base au moins en partie de l'intervalle configurable, dans lequel un ou plusieurs paramètres de l'intervalle configurable sont différents d'un intervalle de transmission fixe pour des réseaux terrestres.
